(19) Europäisches Patentamt / European Patent Office / Office européen des brevets

(11) **EP 2 832 409 B1**

(12) **EUROPEAN PATENT SPECIFICATION**

(45) Date of publication and mention
of the grant of the patent:
**09.05.2018 Bulletin 2018/19**

(21) Application number: **13767567.4**

(22) Date of filing: **28.03.2013**

(51) Int Cl.:
*B01D 39/16* (2006.01)    *D01F 8/10* (2006.01)
*D01F 8/14* (2006.01)    *D04H 1/541* (2012.01)
*D04H 1/542* (2012.01)    *D04H 1/559* (2012.01)
*D04H 1/4309* (2012.01)    *D04H 1/435* (2012.01)
*D04H 1/54* (2012.01)    *D04H 1/56* (2006.01)

(86) International application number:
**PCT/JP2013/059319**

(87) International publication number:
**WO 2013/147051 (03.10.2013 Gazette 2013/40)**

(54) **Nonwoven sheet, process for producing the same, and filter**

Vliesstoffbahn, Verfahren zur Herstellung davon und Filter

Feuille non tissée, son procédé de production, et filtre

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2012 JP 2012075260**

(43) Date of publication of application:
**04.02.2015 Bulletin 2015/06**

(73) Proprietor: **Kuraray Co., Ltd.**
**Okayama 710-8622 (JP)**

(72) Inventors:
• **SAKAMOTO, Yasuhiko**
**Osaka-shi**
**Osaka 530-8611 (JP)**

• **KIYOOKA, Sumito**
**Okayama-shi**
**Okayama 702-8045 (JP)**

(74) Representative: **Vossius & Partner**
**Patentanwälte Rechtsanwälte mbB**
**Siebertstrasse 3**
**81675 München (DE)**

(56) References cited:
**EP-A- 2 003 235        JP-A- H04 145 914
JP-A- 2003 159 506      JP-A- 2007 098 356
JP-A- 2009 233 645      JP-A- 2010 149 037**

**Description**

TECHNICAL FIELD

The present invention relates to a thin nonwoven sheet containing a thermal adhesive fiber, a process for producing the sheet, and a filter formed from the sheet. More specifically, the nonwoven sheet containing the thermal adhesive fiber keeps fiber adhesion so as to have a substantially uniform density in the thickness direction of the sheet and therefore exhibits excellent flexural rigidity and air-permeability and additionally has an excellent formability, without filling of voids (or vacant spaces) between the fibers with a resin or without addition of a chemical binder or a special chemical.

BACKGROUND ART

Nonwoven fabrics are generally dry-laid nonwoven fabrics or wet-laid nonwoven fabrics and are made of natural fibers or chemical fibers as raw materials. A nonwoven fabric is produced by mixing a main fiber, which dominates properties of the resulting nonwoven fabric, with a hot-melt fiber for bonding fiber, and heat-treating the mixture to bond the fibers. The heat treatment and drying of the nonwoven fabric are usually carried out using a touch roller and an air-heating furnace.

Since the heat-treated nonwoven fabric often has a small thickness of less than 1 mm and is easy to fold, the fabric is widely used for a wiper, a sanitary material, and others. Unfortunately, folding (or bending) of such a thin nonwoven fabric by a strong impact or load results in rapid damage, and thus the thin nonwoven fabric is not suitable for a processing method that applies a load on a surface of the fabric. The thin nonwoven fabric is easy to roll up, while a sheet obtained by cutting the rolled fabric is too soft to be handled as a board material.

Meanwhile, as a process for producing a plate-like (or board-like) nonwoven fabric, there may be mentioned a process that comprises laminating card webs to form a thick structural member, and entangling fibers by needle punching or other methods for increasing the density of the structural member as a nonwoven fabric, and then heat-treating the structural member to give a plate-like nonwoven fabric. Unfortunately, a nonwoven fabric having too large thickness and too high density has ununiform bonding of fibers in the thickness direction of the nonwoven fiber, because only fibers on or near the surface of the nonwoven fabric are bonded by the heat treatment. In addition, it is impossible to mass-produce such a nonwoven fabric.

For example, Japanese Patent No. 4522671 (Patent Document 1, JP-4522671B) discloses a nonwoven fabric for a filter; the nonwoven fabric contains a fiber composed of a high-melting-point polymer and a low-melting-point polymer, wherein the fabric partly has a thermocompressed area, the non-thermocompressed area has a structure containing fibers that are not melt-bonded in an inner layer of the nonwoven fabric. The nonwoven fabric has a large filtration area and an excellent dust-collecting capacity. Unfortunately, upon insertion of the fabric to a slit of a filter such as a filter unit, the presence of the area that fibers are not melt-bonded (the non-thermocompressed area) causes strike slip (or horizontal friction) in the central area of the structural member, and the nonwoven fabric is damaged due to peeling-off, thereby lacking a filter function.

Japanese Patent Application Laid-Open Publication No. 2004-19061 (Patent Document 2, JP-2004-19061A) reports a polyester-series composite nonwoven fabric that has a unified lamination structure formed from (A) a nonwoven fabric composed of a continuous-fiber, (B) a nonwoven fabric composed of a sheath-core form conjugated fiber having a sheath containing a low-melting-point polyester, and (C) a polyester nonwoven fabric. The nonwoven fabric is characterized by an improved stiffness due to the lamination and unification and a high filterability. However, due to the three independent layers, the production process of the nonwoven fabric is complicated. In addition, the lamination of the three independent layers easily causes ply separation.

In particular, a filter composed of a thin sheet pleated for the purpose of increasing a filtration area requires a filter strength sufficient to retain the pleated form during long-term use, in order to maintain the filterability during long-term use. Unfortunately, for the thin pleated filter, there is a trade-off relationship between the strength and the filterability, that is, the increase of the strength lowers the filterability, and the both characteristics are difficult to combine. Thus it is difficult to maintain the filterability of the thin pleated filter over long-term use.

Japanese Patent Application Laid-Open Publication No. 2009-233645 (Patent Document 3, JP-2009-233645A) discloses a filter containing a moistenable-thermal adhesive fiber and having a nonwoven structure, wherein the filter comprises a shaped product in which the moistenable-thermal adhesive fibers are melt-bonded to fix the nonwoven structure. Unfortunately, this document is directed to a filter having an excellent filterability and a low pressure drop and allowing a long-term use in spite of a thick three-dimensional structure, and does not suppose a thin filter.

Japanese Patent Application Laid-Open Publication No. 2009-84717 (Patent Document 4, JP-2009-84717A) discloses a plate-like fiber aggregate nonwoven structural member containing a moistenable-thermal adhesive fiber at a proportion of at least 80%; the fiber contains a polyester-series fiber or polyolefinic fiber having a surface covered with a moistenable-thermal adhesive resin and has a fiber diameter of 1 to 10 dtex; and the plate-like fiber aggregate nonwoven structural member is uniformly bonded in the thickness direction at a fiber filling rate of 40 to 85%, has an apparent density of 0.2 to 0.7 g/cm$^3$ and a thickness of 0.5 to 5 mm. This document discloses that the plate-like fiber aggregate nonwoven structural member can be used as a sheet-like hinge for a door, a folding screen, a partition, shoes, a container cover, and others.

Japanese Patent Application Laid-Open Publication No. 2012-77432 (Patent Document 5, JP-2012-77432A) discloses a translucent sheet comprising a fiber aggregate nonwoven structural member, the nonwoven structural member containing a moistenable-thermal adhesive fiber, the fibers being melt-bonded to fix the fibers; the sheet has a lamination structure containing a low-density layer having an apparent density of 10 to 200 kg/m$^3$, and a high-density layer that is laminated on at least one side of the low-density layer and has an apparent density larger than that of the low-density layer. This document states that the translucent sheet is suitable for various uses with a view to natural lighting or light control; the uses include, for example, windows, roofs, wall materials and ceiling materials of house or public buildings, single-leaf screens, doors, storm sashes, shutters, folding screens, lightings, signboards, and lampshades of electrical products.

Unfortunately, Patent Documents 4 and 5 are silent on any filter.

EP 2003235 A2 discloses a molded object having a nonwoven fibrous structure for a building board.

JP 2007-98356 A discloses a composite pleated filter comprising a nonwoven formed by an air-laid method and a nonwoven formed by a melt-blown method.

JP2010-149037 A discloses an air filter wherein fine fibers formed by a melt blown method and heat fusible fibers are mixed.

JP2003-159506 A discloses a heat-resistant filter comprising a heat resistant organic fibrous substrate and a polymer composition comprising a basic substance.

JP H04-145914 A discloses a cartridge filter having a layer formed by fine fibers and a layer formed by thick fibers.

RELATED ART DOCUMENTS

PATENT DOCUMENTS

    Patent Document 1: JP-4522671B (claim 2, Example 2)
    Patent Document 2: JP-2004-19061A (claim 1, Examples)
    Patent Document 3: JP-2009-233645A (claim 1, paragraph [0009])
    Patent Document 4: JP-2009-84717A (claim 1, paragraph [0061])
    Patent Document 5: JP-2012-77432A (claim 1, paragraph [0158])

SUMMARY OF THE INVENTION

PROBLEMS TO BE SOLVED BY THE INVENTION

It is therefore an object of the present invention to provide a nonwoven sheet for a filter, the sheet having an improved flexural rigidity, less deformation under a load, and an excellent formability in spite of a small thickness thereof; a process for producing the nonwoven sheet; as well as a filter formed from the sheet.

Another object of the present invention is to provide a nonwoven sheet for a filter, the sheet having an excellent pleatability and maintaining a high form or configuration stability and a filterability over a long period of time after being pleated; a process for producing the nonwoven sheet; as well as a filter formed from the sheet.

MEANS TO SOLVE THE PROBLEMS

The inventors of the present invention made intensive studies to achieve the above objects and finally found that a substrate layer containing thermal adhesive fibers substantially uniformly melt-bonded in the surface direction of the substrate layer (in particular, a lamination structure having a density gradient) allows formation of a nonwoven sheet for a filter; the nonwoven sheet has an improved flexural rigidity, less deformation under a load, and an excellent formability, in spite of the thinness of the sheet. The present invention was accomplished based on the above findings.

That is, the inventive nonwoven sheet for a filter contains a substrate layer made of a fiber aggregate nonwoven structural member (a nonwoven structural member or a nonwoven fibrous structural member). The fiber aggregate nonwoven structural member consists of a thermal adhesive fiber (a heat-adhesive fiber). The thermal adhesive fibers are melt-bonded to fix the fibers of the fiber aggregate nonwoven structural member. The substrate layer has an average thickness of not less than 0.2 mm to less than 1 mm and an apparent density of 30 to 170 kg/m$^3$, and the thermal adhesive fibers are substantially uniformly melt-bonded in a surface direction of the substrate layer. The sheet of the present invention

further has a surface layer over at least one side of the substrate layer, and the surface layer comprises a fiber aggregate nonwoven structural member having an apparent density higher than the apparent density of the substrate layer. The surface layer may contain a layer formed by heat-pressing. The substrate layer may have an apparent density of 40 to 150 kg/m$^3$, the surface layer may have an apparent density of 80 to 800 kg/m$^3$, and the nonwoven sheet may have an apparent density ratio of both layers of 1/1.2 to 1/15 in a ratio of the substrate layer/the surface layer. The fiber aggregate nonwoven structural member constituting the surface layer may be made of a meltblown nonwoven fabric. The surface layer may contain a meltblown nonwoven fabric and may be in the form of a heat-pressed layer. The nonwoven sheet may have an average thickness of 0.35 to 1.2 mm and an average thickness ratio of the substrate layer relative to the surface layer of 1.2/1 to 30/1 in a ratio of the substrate layer/the surface layer. The thermal adhesive fiber may be substantially uniformly melt-bonded in a thickness direction of the substrate layer. The thermal adhesive fiber may contain an ethylene-vinyl alcohol-series copolymer, and the ethylene-vinyl alcohol-series copolymer may form a continuous area of a surface of the thermal adhesive fiber in a longitudinal direction of the thermal adhesive fiber. The ethylene-vinyl alcohol-series copolymer has an ethylene unit content of 10 to 60% by mol. The thermal adhesive fiber may contain a hydrophilic polyester, and the hydrophilic polyester may form a continuous area of a surface of the thermal adhesive fiber in a longitudinal direction of the thermal adhesive fiber. The sheet of the present invention may have a flexural rigidity of not more than 70 mm in machine direction and that of not more than 70 mm in cross direction, where the flexural rigidity is shown as a displacement by gravity upon a sheet of 25 mm wide and 300 mm long being slid over so as to protrude for 100 mm from an edge of a horizontal table.

The present invention also includes a process for producing the sheet; the process comprises a melt-bonding step of heating a nonwoven web containing a thermal adhesive fiber to melt-bond the thermal adhesive fibers and give a plate-like fiber aggregate nonwoven structural member. In the melt-bonding step, the nonwoven web may be heated by a high-temperature water vapor. The production process of the present invention may further contain a step of heat-pressing at least one side of the plate-like fiber aggregate nonwoven structural member given in the melt-bonding step. The production process of the present invention may further contain a meltblown lamination step of laminating a meltblown nonwoven fabric over at least one side of the plate-like fiber aggregate nonwoven structural member given in the melt-bonding step and heating the resulting laminated product by a high-temperature water vapor.

Further, the present invention includes a filter made of the nonwoven sheet. The filter may be pleated.

EFFECTS OF THE INVENTION

According to the present invention, the present sheet contains a substrate layer containing thermal adhesive fibers substantially uniformly melt-bonded in the surface direction of the layer. Accordingly, even in a case where the sheet is similar in thinness to a conventional nonwoven fabric, the thin sheet has an improved stiffness. Thus, unlike the conventional thin nonwoven fabric, whose stiffness is too small to be formed, the sheet of the present invention is formable into various shapes. Moreover, a fiber board having a thickness larger than 1 mm, which is too hard, cannot be formed into various shapes due to difficulty in forming into a specified shape, while the fiber structural member according to the present invention, which has a thickness of smaller than 1 mm, has an excellent formability. Thus the fiber structural member is suitable for forming a filter and has an excellent pleatability. Even the fiber structural member pleated has a high form or configuration stability and maintains a filterability over a long period of time.

Further, the nonwoven sheet of the present invention is composed of only fibers and is producible without addition of any chemical binder or special chemical. Thus the nonwoven sheet does not release volatile organic compounds, such as formaldehyde.

BRIEF DESCRIPTION OF DRAWINGS

[Fig. 1] Fig. 1 is a schematic diagram showing a method for measuring a flexural rigidity of a nonwoven sheet in accordance with an embodiment of the present invention.

[Fig. 2] Fig. 2 is a schematic diagram showing a method for measuring a load deformation of a pleated product of a nonwoven sheet in accordance with an embodiment of the present invention.

DESCRIPTION OF EMBODIMENTS

[Substrate layer]

The nonwoven sheet of the present invention contains a substrate layer. The substrate layer is made of a fiber aggregate nonwoven structural member containing a thermal adhesive fiber and being fixed by melt-bonding the thermal adhesive fibers. The present application discloses that it is preferred that the fiber aggregate nonwoven structural member substantially contains the thermal adhesive fiber alone. The present application discloses that the fiber aggregate nonwoven structural member may contain a slight amount of a non-thermal adhesive fiber as far as the non-thermal adhesive fiber does not reduce the adhesiveness of the thermal adhesive fiber. In the claimed nonwoven sheet, the fiber aggregate nonwoven structural member consists of the thermal adhesive fiber. In a substrate layer consisting of the thermal adhesive fiber, strong adhesion of the thermal adhesive fibers at the respective contact points prevents deformation of the network structure of the structural member and decreases in filterability, even if the nonwoven sheet is used as filter over a long period of time.

(Thermal adhesive fiber)

The thermal adhesive fiber contains a thermal adhesive resin and can be fluidized or easily deformed by heating to express an adhesive function. The thermal adhesive fiber may include a non-moistenable-thermal adhesive fiber. The thermal adhesive fiber preferably includes a moistenable-thermal adhesive fiber (or a thermal adhesive fiber under moisture) in the light of uniform melt-bondability by a high-temperature water vapor and excellent filter characteristics. The substrate layer can produce an objective thin structural member having a sufficient stiffness by the following manner: applying a high-temperature vapor on a fiber web containing the thermal adhesive fiber (in particular, the moistenable-thermal adhesive fiber) as a raw fiber, partly bundling the thermal adhesive fibers at a temperature of not higher than the melting point of the thermal adhesive resin in a dry state, and bonding these mono-fibers and bundled fibers under moisture at contact points or areas thereof, as if forming a jungle-gym (a three-dimensional crosslinking) of the fibers, while retaining moderately tiny voids between the fibers.

The moistenable-thermal adhesive resin contained in the moistenable-thermal adhesive fiber may include a thermoplastic resin that can soften with (or by) a hot water (e.g., a water having a temperature of about 80 to 120°C, particularly about 95 to 100°C) so as to bond to itself or to other fibers. The thermoplastic resin may include, for example, a poly (alkylene glycol) resin [e.g., a poly($C_{2-4}$alkylene oxide) such as a poly(ethylene oxide) or a poly(propylene oxide)], a polyvinyl-series resin [e.g., a polyvinylpyrrolidone, a poly(vinyl ether), a vinyl alcohol-series polymer, and a poly(vinyl acetal)], an acrylic copolymer and an alkali metal salt thereof [e.g., a copolymer containing an acrylic monomer unit (such as (meth) acrylic acid or (meth) acrylamide), or a salt of the copolymer], a modified vinyl-series copolymer [e.g., a copolymer of a vinyl-series monomer (such as isobutylene, styrene, ethylene, or vinyl ether) and an unsaturated carboxylic acid or an anhydride thereof (such as maleic anhydride), or a salt of the copolymer], a polymer having a hydrophilic substituent (e.g., a polyester or a salt thereof, a polyamide or a salt thereof, and a polystyrene or a salt thereof, each having a substituent, such as a sulfonic acid group, a carboxyl group or a hydroxyl group), and an aliphatic polyester-series resin (e.g., a polylactic acid-series resin). Further, the moistenable-thermal adhesive resin may also include a resin that is a polyolefin-series resin, a polyester-series resin, a polyamide-series resin, a polyurethane-series resin, a thermoplastic elastomer or a rubber (e.g., a styrene-series elastomer) and that can soften at a temperature of a hot water (high-temperature water vapor) to express an adhesive function. The moistenable-thermal adhesive resin may have a melting point or softening point of, for example, about 80 to 250°C, preferably about 100 to 200°C, and more preferably about 100 to 180°C (particularly, about 105 to 170°C). Among them, an ethylene-vinyl alcohol-series copolymer and a hydrophilic polyester are preferred.

The ethylene-vinyl alcohol-series copolymer has an ethylene unit content of, for example, about 10 to 60% by mol, preferably about 20 to 55% by mol, and more preferably about 30 to 50% by mol, in the light of processability (or formability) into a filter. Even after heating with a high-temperature water vapor, an ethylene-vinyl alcohol-series copolymer having an excessively low ethylene unit content readily swells or becomes a gel by a low temperature vapor (water), whereby the copolymer is easy to deform when getting wet. In contrary, an ethylene-vinyl alcohol-series copolymer having an excessively high ethylene unit content has a low hygroscopicity. In such a case, it is difficult to express melt-bonding of the fiber under moisture and heat, and thus a substrate layer having a practical hardness is sometimes difficult to obtain.

The degree of saponification of the vinyl alcohol unit in the ethylene-vinyl alcohol-series copolymer is, for example, about 90 to 99.99% by mol, preferably about 95 to 99.98% by mol, and more preferably about 96 to 99.97% by mol. An ethylene-vinyl alcohol-series copolymer having an excessively small degree of saponification has a low thermal stability and easily induces thermal decomposition or gelation; thus the resulting fiber has a low form or configuration stability. In contrast, for an ethylene -vinyl alcohol-series copolymer having an excessively large degree, it is difficult to produce the fiber itself.

The ethylene-vinyl alcohol-series copolymer may have a viscosity-average degree of polymerization selected according to need, for example, a viscosity-average degree of polymerization of about 200 to 2500, preferably about 300 to 2000, and more preferably about 400 to 1500. An ethylene-vinyl alcohol-series copolymer having a viscosity-average degree of polymerization within the above-mentioned range allows an excellent balance between spinning property and thermal adhesiveness under moisture. An ethylene-vinyl alcohol-series copolymer having a high ethylene unit content allows a unique behavior, that is, both thermal adhesiveness under moisture and insolubility in hot water.

The hydrophilic polyester may be a copolyester having a hydrophilic unit (e.g., a substituent) (amodified copolyester). The copolyester may include a copolyester containing an alkylene arylate unit as a main unit, in particular, preferably includes a copolyester containing a $C_{2-6}$alkylene arylate unit [e.g., a $C_{2-4}$alkylene terephthalate unit constituting a poly(ethylene terephthalate) or a poly(butylene terephthalate), etc.] as a main unit and another copolymerizable component (a modifying agent) . Another copolymerizable component may be a diol component such as a poly($C_{2-4}$alkylene glycol) (particularly, diethylene glycol) . As another copolymerizable component, an asymmetric aromatic dicarboxylic acid, such as isophthalic acid or phthalic acid (particularly, isophthalic acid), is preferred.

The proportion of another copolymerizable component in the corresponding total monomer component (for example, for isophthalic acid, the proportion in the total carboxylic acid component) is, for example, about 10 to 60% by mol (e.g., about 10 to 50% by mol), preferably about 20 to 55% by mol, and more preferably about 30 to 50% by mol. An excessively small proportion of another copolymerizable component fails to express sufficient fiber adhesion, resulting in a low stiffness of the resulting fiber aggregate nonwoven structural member. An excessively large proportion of another copolymerizable component improves fiber adhesiveness, while the large proportion causes a low spinning stability.

The hydrophilic unit (for example, a substituent) may include, for example, a sulfonic acid group, a carboxyl group, a hydroxyl group, and a polyoxyethylene group. The manner for introducing the hydrophilic substituent to the polyester is not particularly limited to a specific one, and for example, may include copolymerization of a monomer having a hydrophilic unit.

The monomer having a hydrophilic unit may include, for example, a dicarboxylic acid (such as sodium 5-sulfoisophthalate) and a diol [such as diethylene glycol, a poly(ethylene glycol), or a poly(tetramethylene glycol)]. These monomers, each having a hydrophilic unit, may be used alone or in combination. Among them, a monomer having a sulfonic acid (sulfonate) group, such as sodium 5-sulfoisophthalate, is preferred.

The proportion of the monomer having a hydrophilic unit [in particular, a monomer having a sulfonic acid (sulfonate) group as a substituent] in the whole hydrophilic polyester may be about 0.1 to 5% by mass (particularly, about 0.5 to 3% by mass). A hydrophilic polyester having an excessively small proportion of the monomer has an insufficient hydrophilicity. A hydrophilic polyester having an excessively large proportion of the monomer has a low spinnability, which highly induces broken single fiber or fiber breakage.

For use of the nonwoven sheet as a filter for a liquid (such as an oil component), a lipophilic monomer may be copolymerized. The lipophilic monomer may include a dicarboxylic acid [such as naphthalene-2,6-dicarboxylic acid, 4,4'-diphenylcarboxylic acid, or bis(carboxyphenyl)ethane] or a diol (such as 1,3-propanediol, 1,4-butanediol, 1,6-hexanediol, neopentyl glycol, or cyclohexane-1,4-dimethanol).

It is sufficient that the thermal adhesive resin is present on the surface of the thermal adhesive fiber. In terms of adhesiveness, the thermal adhesive resin is preferably present continuously extending in the longitudinal direction of the fiber (or forms a continuous area of a surface of the fiber in a longitudinal direction of the fiber). The thermal adhesive fiber may be a non-conjugated fiber (or a single-phase fiber) composed of a thermal adhesive resin alone. In terms of form retentivity (or shape retention), the thermal adhesive fiber preferably includes a conjugated fiber containing a thermal adhesive resin and a fiber-forming polymer; the thermal adhesive resin is present continuously in the longitudinal direction of the fiber on the surface of the fiber, the fiber-forming polymer makes it possible to retain the fiber form at a temperature heated for thermal adhesion. The cross-sectional structure of the conjugated fiber may include, for example, a sheath-core form, an islands-in-the-sea form, a side-by-side form or a multi-layer laminated form, a radially-laminated form, and a random composite form. Among these cross-sectional structures, in the light of the structure having a high adhesiveness, a preferred one includes the sheath-core form structure, in which the thermal adhesive resin occupies the whole surface of the fiber continuously along the longitudinal direction of the fiber (that is, the sheath-core form structure having a sheath composed of the thermal adhesive resin). In such a sheath-core form conjugated fiber, a core composed of a fiber-forming polymer that does not melt or soften by a heating treatment (such as a treatment with a high-temperature water vapor) contributes to the form retention of the fiber, and thus the fiber can retain the original structure of the fiber even after a heat treatment.

In the conjugated fiber, a resin widely used as the fiber-forming polymer may include a polyolefin-series resin, a (meth)acrylic resin, a vinyl chloride-series resin, a styrene-series resin, a polyester-series resin, a polyamide-series resin, a polycarbonate-series resin, a polyurethane-series resin, a thermoplastic elastomer, a cellulose-series resin, and others. These fiber-forming polymers may be used alone or in combination. Among these fiber-forming polymers, in the light of the heat resistance, dimensional stability, and others, it is preferred to use a resin having a melting point higher than that of the ethylene-vinyl alcohol-series copolymer or hydrophilic polyester, for example, a polypropylene-series resin, a polyester-series resin, and a polyamide-series resin. In terms of excellent balance of heat resistance, fiber processability, and others, a polyester-series resin or a polyamide-series resin is particularly preferred.

The polyester-series resin preferably includes an aromatic polyester-series resin such as a poly($C_{2-4}$alkylene arylate)-series resin [e.g., a poly(ethylene terephthalate) (PET), a poly(trimethylene terephthalate), a poly(butylene terephthalate), and a poly(ethylene naphthalate)], particularly, a poly (ethylene terephthalate) -series resin such as a PET. The poly (ethylene terephthalate) -series resin may contain, in addition to an ethylene terephthalate unit, a unit derived from a dicarboxylic acid other than terephthalic acid or from a diol other than ethylene glycol in the proportion not more than 20% by mol. Incidentally, the above-mentioned dicarboxylic acid or diol may include a dicarboxylic acid (e.g., isophthalic acid, naphthalene-2,6-dicarboxylic aid, phthalic acid, 4,4'-diphenylcarboxylic acid, bis(carboxyphenyl)ethane, and sodium 5-sulfoisophthalate) and a diol (e.g., diethylene glycol, 1,3-propanediol, 1,4-butanediol, 1,6-hexanediol, neopentyl glycol, cyclohexane-1,4-dimethanol, a polyethylene glycol, and a polytetramethylene glycol).

The polyamide-series resin preferably includes, e.g., an aliphatic polyamide and a copolymer thereof (such as a polyamide 6, a polyamide 66, a polyamide 610, a polyamide 10, a polyamide 12, or a polyamide 6-12) and a semiaromatic polyamide synthesized from an aromatic dicarboxylic acid and an aliphatic diamine. These polyamide-series resins may also contain other copolymerizable units.

For the conjugated fiber, the proportion of the thermal adhesive resin in the whole resin component constituting the fiber (e.g., for the sheath-core form conjugated fiber, the proportion of the sheath) is, for example, about 20 to 60% by mass (particularly, about 30 to 55% by mass) . A conjugated fiber having an excessively large proportion of the thermal adhesive resin fails to sufficiently develop a fiber strength to be derived from the fiber-forming polymer, and thus it is difficult to sufficiently develop the strength of the conjugated fiber itself. In contrast, a conjugated fiber having an excessively small proportion of the thermal adhesive resin fails to retain the conjugated form of the fiber. It is difficult not only to allow the thermal adhesive resin to continuously exist in the longitudinal direction of the fiber, but also to form fiber bundles in the inside of the sheet. Thus the conjugated fiber has difficulty in maintaining a sufficient flexural rigidity.

The cross-sectional form of the thermal adhesive fiber (the form or shape of the cross section perpendicular to the longitudinal direction of the fiber) may be a hollow cross-sectional form. For the conjugated fiber, such as a sheath-core form conjugated fiber, the cross-sectional form is usually a common solid-core cross-sectional form, such as a circular cross section or a deformed (or modified) cross section.

The thermal adhesive fiber has an average fineness of, for example, about 0.5 to 10 dtex, preferably about 1 to 5 dtex, and more preferably about 1.5 to 3.5 dtex. A conjugated fiber having an excessively small fineness is difficult to produce and has a low fiber strength. A conjugated fiber having an excessively large fineness has a difficulty in producing a thin sheet.

The thermal adhesive fiber has an average fiber length of, for example, about 10 to 100 mm, preferably about 25 to 75 mm, and more preferably about 40 to 65 mm. An excessively short fiber length makes it difficult to form a fiber web in a succeeding step and to obtain a sufficient fiber entanglement. Thus it is difficult to ensure the strength of the fiber web. An excessively long fiber length hinders the formation of a fiber web having a uniform basis weight.

The thermal adhesive fiber may further contain a commonly-used additive. The additive may include, for example, a stabilizer (e.g., a heat stabilizer such as a copper compound, an ultraviolet absorber, a light stabilizer, or an antioxidant), a dispersing agent, a thickener or a viscosity controlling agent, a particulate (or fine particle), a coloring agent, an antistatic agent, a flame retardant, a plasticizer, a lubricant, a crystallization speed retardant, a lubricating agent, an antibacterial agent, an insecticide or acaricide, a fungicide, a delustering agent, a thermal storage medium (or agent), a perfume (or a fragrant material), a fluorescent brightener, and a humectant (or a wetting agent). These additives may be used singly or in combination. The additive may adhere on (or may be supported to) a surface of the fiber or may be contained in the fiber.

For a filter requiring flame retardancy, a flame retardant among these additives may be added. As the flame retardant, a boron-containing flame retardant and/or a silicon-containing flame retardant is preferred in terms of excellent flame retardancy. The boron-containing flame retardant may include, for example, a boric acid (such as orthoboric acid or metaboric acid), a borax, a salt of a boric acid (e.g., sodium borate), and a condensed boric acid (salt). The silicon-containing flame retardant may include, for example, a silicone compound (such as a polyorganosiloxane), an organic silicate, and a silica. These flame retardants may be used alone or in combination. Among them, a preferred one includes a flame retardant containing a boric acid and a borax as main components. Aparticularly preferred one includes a flame retardant consisting of a solution of 10 to 35 parts by mass of a boric acid and 15 to 45 parts by mass of a borax in 100 parts by mass of water.

The process for imparting flame retardancy to the filter may include a process, like a conventional dip-nip process, comprising impregnating or spraying the fiber aggregate nonwoven structural member with an aqueous solution or emulsion of the flame retardant and then drying the obtained structural member, a process comprising kneading the resin and the flame retardant by a biaxial extruder to extrude a fiber and spinning the obtained fiber, or the like.

The proportion of the flame retardant is not particularly limited to a specific one as far as the flame retardant achieves an objective flame-retardant effect. In terms of excellent balance of various characteristics, the proportion of the flame retardant in the fiber aggregate nonwoven structural member is about 1 to 15% by mass (particularly, about 3 to 10% by mass).

The addition of these flame retardants not only can impart an extremely excellent flame retardancy to the fiber aggregate nonwoven structural member, but also can avoid problems with other flame retardants . Such problems include, e.g., for a halogen-containing flame retardant, acid rain induced by generation of halogen gas in incineration; for a phosphorus-containing flame retardant, eutrophication of lakes and marches caused by discharge of phosphorus compounds due to hydrolysis.

(Fiber aggregate nonwoven structural member)

The fiber aggregate nonwoven structural member constituting the substrate layer is obtainable by heating a nonwoven web containing the thermal adhesive fibers to melt-bond the thermal adhesive fibers. The thermal adhesive fibers are substantially uniformly melt-bonded in the surface direction of the fiber aggregate nonwoven structural member. In producing such a fiber web, the mixing ratio of the adhesive fiber in the web is preferably 100% by mass. That is, it is easy to harden a fiber aggregate nonwoven structural member consisting of the thermal adhesive fiber alone. Moreover, a filter structure having a uniformity and a high form or configuration stability can be obtained by forming the substrate layer from the thermal adhesive fibers alone and securely melt-bonding the fibers at intersection points (or contact points) of the fibers. The filter can retain the uniform structure over long-term use and has a high durability. For a filter containing the fiber and large quantities of other fibers, it is difficult to obtain a sufficient flexural rigidity. Further, after fabrication, the structural member has a low strength, which makes a difficulty in retaining the form of the structural member.

In order to obtain a thin fiber aggregate nonwoven structural member, having an excellent flexural rigidity and a well-balanced air-permeability, from such a fiber web, it is necessary to moderately adjust the arrangement and bonding state of the fibers constituting the web. That is, in forming the fiber web, it is desired that the constituting fibers be distributed or arranged to cross each other at each intersection point thereof with putting the fiber length direction in a direction approximately parallel to the surface of the fiber web. In the resulting fiber aggregate nonwoven structural member, it is desired that the fibers be melt-bonded at the intersection points thereof, and that a few or tens of the fibers approximately parallel to each other may be melt-bonded to form a melt-bonded bundle of the fibers in addition to the fibers melt-bonded at the intersection points thereof. The formation of the melt-bond of the fibers at spaced and discrete distance (such as the melt-bond of the mono-fibers at the intersection points thereof, the melt-bond of the melt-bonded bundles of the fibers, or the melt-bond of the mono-fiber to the melt-bonded bundles of the fibers) leads to a structure which is like a jungle-gym (or a three-dimensional crosslinking) of the fibers, thereby providing a fiber aggregate nonwoven structural member having an objective flexural rigidity. According to the present invention, it is desired that such a structure be approximately uniformly distributed along the surface direction and the thickness direction.

As used herein, the term "(the fiber) being distributed or arranged to cross each other with putting the fiber length direction in a direction approximately parallel to the surface of the fiber web" means a state of the fibers in the fiber web which is free from the high frequent distribution of part or area having a large number of the fibers with being the fiber length direction parallel to the thickness direction, for example, like a needle-punched nonwovenfabric. More specifically, based on the observation of any area of the cross section of the fiber web by a microscope, the presence rate of the fiber having an apparent length of not less than 30% of the thickness of the fiber web is not more than 10%.

Distributing or arranging the fiber with putting the fiber length direction in a direction approximately parallel to the surface of the fiber web avoids or eliminates a large amount (or a lump) of the fibers with being the fiber length direction approximately parallel to the thickness direction (in a direction perpendicular to the surface of the fiber web), which disturbs the arrangement of the fibers adjacent thereto. The disorder causes the formation of excessively large voids between the fibers in the fiber aggregate nonwoven structural member, which decreases the flexural rigidity of the fiber aggregate nonwoven structural member.

Moreover, for a fiber aggregate nonwoven structural member having a large void, when a load is applied to the fiber aggregate nonwoven structural member in a thickness direction thereof, e.g., by placing an object on the surface of the fiber aggregate nonwoven structural member, the void is destroyed by the applied load, and the surface of the structural member is easily deformed. In particular, when the load is applied on the whole surface of the structural member, the thickness of the structural member is easily reduced. A structural member filled with a resin and having no voids eliminates the problem mentioned above. However, such a structural member filled with a resin hardly affords air-permeability, and breaking resistance (folding endurance) at bending. Meanwhile, a fiber aggregate nonwoven structural member comprising a finer fiber, being filled tightly therewith, may reduce a deformation in the thickness direction by the applied load. However, when only the finer fibers are used to produce a fiber aggregate nonwoven structural member being air-permeable, the fiber aggregate nonwoven structural member has an insufficient flexural rigidity due to a low stiffness of each finer fiber. In order to produce a fiber aggregate nonwoven structural member containing the finer fiber and having a sufficient flexural rigidity, it is necessary to enlarge the diameter of the finer fiber in some degree. However, only mixing (or adding) the thick fibers with (to) the fiber web is not enough to overcome the problem since large voids are easily formed around the intersection points of the thick fibers. Thus it is difficult to prevent the deformation of the fiber aggregate nonwoven structural member in the thickness direction.

According to the present invention, the fiber aggregate nonwoven structural member attains moderate air-permeability and flexural rigidity by the following manner: arranging or dispersing the fibers constituting the fiber aggregate nonwoven structural member to intersect with each other, with being the fiber length direction substantially (or approximately) parallel to the web surface; and bonding the fibers at the intersection points thereof to form continuous small voids between the fibers. Moreover, in part or area in which the adjacent fibers do not intersect with each other but are approximately parallel to each other, the bundles of the fibers are melt-bonded in the fiber length direction. Thereby, a fiber aggregate nonwoven structural member having the melt-bonded bundles of the fibers in addition to the mono-fibers melt-bonded at the intersection points mainly attains a higher flexural rigidity compared with a fiber aggregate nonwoven structural member only containing the mono-fibers that are not melt-bonded. Among others, it is particularly preferred that the fiber aggregate nonwoven structural member have the mono-fibers melt-bonded at the intersection points to form fiber bundles between the intersection points of the mono-fibers melt-bonded . Such a structure can be revealed by the observation of the present state (or appearance) of the mono-fibers in the cross section of the structural member.

The presence frequency (number) of the mono-fiber in 1 mm$^2$ selected arbitrarily in the cross section of the fiber aggregate nonwoven structural member (the substrate layer) may be not more than 100/mm$^2$ and is preferably not more than 60/mm$^2$, and more preferably not more than 25/mm$^2$. An excessively high presence frequency of the mono-fiber means less formation of the melt-bonded bundle of the fibers, and thus the fiber aggregate nonwoven structural member has a low flexural rigidity. Further, it is preferred that the bundle of the fibers be thin in the thickness direction of the fiber aggregate nonwoven structural member and wide in the surface direction (the longitudinal direction or width direction of the surface).

The functions (or characteristics) of the fiber aggregate nonwoven structural member are affected by the presence state of the melt-bonded bundle of the fibers. Since the fibers each are melt-bonded in a bundle form or at intersection points with each other, it is sometimes difficult to observe the fibers individually. According to the present invention, the area ratio of the total cross section of the fiber and the fiber bundle relative to the cross section of the structural member after the processing thereof can be used as a value representing the degree of melt-bond of the fibers. That is, the area ratio is the fiber-occupancy ratio in cross section (or the fiber-occupancy ratio). The fiber-occupancy ratio in cross section is, for example, about 20 to 80%, preferably about 20 to 60%, and more preferably about 30 to 50%. An excessively small fiber-occupancy ratio in cross section provides a large number of voids in the fiber aggregate nonwoven structural member, whereby it is difficult to provide a fiber aggregate nonwoven structural member having a desired flexural rigidity. In contrast, an excessively large fiber-occupancy ratio in cross section provides a fiber aggregate nonwoven structural member having a sufficient flexural rigidity, but the fiber aggregate nonwoven structural member is very heavy and tends to have a low air-permeability, and in addition, has a low processability (or formability).

Further, in order to impart a higher balance of sufficient flexural rigidity and air-permeability to the fiber aggregate nonwoven structural member, it is preferred that the fiber aggregate nonwoven structural member contain the above-mentioned fiber bundles as constituting fibers and have a low presence frequency of the cross section of the mono-fibers and that bonding of each fiber (bundled fiber and/or mono-fiber) at the intersection point (or contact point) thereof be as infrequently as possible. Such a structure provides fine voids and pathways therein and a sufficient air-permeability. Accordingly, in order to impart sufficient flexural rigidity and air-permeability to a fiber aggregate nonwoven structural member having the number of the contact points of the fibers as little as possible, it is preferred that the bonding points of each fiber mentioned above be uniformly distributed from the surface through the inside (middle) to the backside of the structural member in the thickness direction. The concentration of the bonding points at the surface or inside of the structural member not only makes it difficult to provide a structural member having sufficient flexural rigidity and air-permeability, but also causes a low form or configuration stability in an area having less bonding points.

Accordingly, in the fiber aggregate nonwoven structural member, when the fiber-occupancy ratio in cross section (that is, the area proportion of the total fiber cross-section in the cross section of the structural member) in each of three areas obtained by dividing the fiber aggregate nonwoven structural member into three equally with respect to the thickness direction is determined, the difference between the maximum and minimum of occupancies with the fiber in each of three areas may be not more than 20%, preferably not more than 15%, and more preferably not more than 10%.

Moreover, the bonding points in the fiber aggregate nonwoven structural member can also be evaluated by bonded fiber ratio (or ratio of bonded fiber) . The bonded fiber ratio by melt-bonding of the thermal adhesive fibers constituting the nonwoven structure is, for example, about 3 to 70%, preferably about 5 to 50% (e.g., about 10 to 40%), and more preferably about 12 to 35% (particularly, about 15 to 30%).

The bonded fiber ratio in the present invention can be determined by a method in Examples described later. The bonded fiber ratio means the proportion of the number of the cross sections of two or more fibers bonded relative to the total number of the cross sections of fibers in the cross section of the nonwoven structure. Accordingly, the low bonded fiber ratio means a low proportion of the melt-bond of a plurality of thermal adhesive fibers (or a low proportion of the fibers melt-bonded to form bundles).

It is preferred that the bonded fiber ratio in each of three areas in the cross section of the fiber aggregate nonwoven structural member be within the above-mentioned range. The above-mentioned three areas are obtained by cutting the fiber aggregate nonwoven structural member across the thickness direction and dividing the obtained cross section equally into three in a direction perpendicular to the thickness direction. In addition, the ratio of the minimum of the bonded fiber ratio relative to the maximum thereof in the three areas (the minimum/the maximum) (the ratio of the minimum bonded fiber ratio relative to the maximum bonded fiber ratio among the three areas) is, for example, not less than 50% (e.g., about 50 to 100%), preferably about 60 to 99.9%, and more preferably about 70 to 99.5% (particularly about 80 to 99%). According to the present invention, owing to such a uniform distribution of the bonded fiber ratio of the substrate layer in the thickness direction, the fiber aggregate nonwoven structural member has both strength and air-permeability necessary for a pleated filter.

The bonded fiber ratio can easily be determined by the following manner: taking a macrophotography of the cross section of the fiber aggregate nonwoven structural member by using a scanning electron microscope (SEM); and counting the number of the cross section of the melt-bonded fibers in a predetermined area of the macrophotograph. However, for a melt-bonded bundle of the fibers, since the fibers form a bundle with each other or intersect with each other, the observation (or counting) of individual fibers (or the observation (or counting) of the single fiber) tends to be difficult, particularly in the dense aggregation of the fibers. In this case, for example, the determination of the bonded fiber ratio is as follows, which is obtained by bonding the fibers with a sheath-core form conjugated fiber comprising a sheath part comprising the moistenable-thermal adhesive fiber and a core part comprising a fiber-forming polymer: observing the cross section of the fiber aggregate nonwoven structural member; loosing the melt-bonded fibers by a mean such as melting or washing out (or off) the moistenable-thermal adhesive fiber; observing the cross section again; and comparing the observations with each other.

The fiber aggregate nonwoven structural member (substrate layer) has an apparent density of 30 to 170 kg/m$^3$, for example, about 40 to 150 kg/m$^3$, preferably about 45 to 130 kg/m$^3$, and more preferably about 50 to 120 kg/m$^3$ (particularly about 55 to 100 kg/m$^3$). A fiber aggregate nonwoven structural member having an excessively low apparent density has lightness in weight, while the member is difficult to possess a sufficient flexural rigidity. In contrast, although a fiber aggregate nonwoven structural member having an excessively high apparent density possesses a sufficient hardness, too hard structural member has a low forming processability and tends to have a low filterability. For the substrate layer, the density distribution is substantially uniform. Thus, even in a case where a surface layer having an ununiform density distribution is laminated on the substrate layer, the boundary between the both layers can be observed by an electron microscope or the like. Moreover, the boundary can also be confirmed by dividing the fiber aggregate nonwoven structural member into maximum 20 areas along the thickness direction thereof on an electron micrograph of the fiber aggregate nonwoven structural member and determining the density distribution from the fiber-occupancy ratio in cross section in each area.

The fiber aggregate nonwoven structural member (substrate layer) has a thickness (average thickness) of not less than 0.2 mm to less than 1 mm, for example, about 0.22 to 0.99 mm, preferably about 0.23 to 0.9 mm (e.g., about 0.25 to 0.8 mm), and more preferably about 0.28 to 0.7 mm (particularly about 0.3 to 0.6 mm). For a fiber aggregate nonwoven structural member having an excessively large thickness, the resulting filter has a low lightness in weight and an insufficient thinness, and additionally has a low forming processability (e.g., pleatability). For a fiber aggregate nonwoven structural member having an excessively small thickness, the resulting filter has a low form or configuration stability.

[Surface layer]

The nonwoven sheet disclosed in the present application may contain the substrate layer alone. In terms of the form retention and filterability of the sheet pleated, the nonwoven sheet preferably has a surface layer on (or over) at least one side of the substrate layer; the surface layer is made of a fiber aggregate nonwoven structural member having an apparent density higher than the apparent density of the substrate layer. The claimed nonwoven sheet comprises a surface layer over at least one side of the substrate layer. A nonwoven sheet containing the substrate layer and the high-density surface layer has an improved filterability (e.g., collection efficiency), and the lamination structure increases the filter strength and the form or configuration stability of the filter. Even in a case where the sheet is pleated to form a filter, the form of the pleat can be maintained over a long period of time.

As is the case with the substrate layer, the fiber aggregate nonwoven structural member constituting the surface layer is made of a fiber aggregate nonwoven structural member containing a thermal adhesive fiber and being fixed by melt-bonding the thermal adhesive fibers. It is preferred that the fiber aggregate nonwoven structural member constituting the surface layer substantially contain the thermal adhesive fiber alone, as is the case with the substrate layer. It is particularly preferred that the surface layer be composed of the thermal adhesive fiber alone. The thermal adhesive fiber in the surface layer may be different from that in the substrate layer. In the light of the adhesiveness between the surface layer and the substrate layer, and others, the thermal adhesive fiber in the surface layer preferably includes a thermal adhesive fiber containing the same species or the same thermal adhesive resin as the thermal adhesive resin constituting the substrate layer; the thermal adhesive resin may include, for example, a moistenable-thermal adhesive resin such as an ethylene -vinyl alcohol-series copolymer or a hydrophilic polyester. In a case where the substrate layer contains a conjugated fiber containing a thermal adhesive resin and a fiber-forming polymer (for example, a sheath-core form conjugated fiber having a sheath composed of a moistenable-thermal adhesive resin), the surface layer may contain a thermal adhesive fiber composed of the thermal adhesive resin alone as a resin component (for example, a fiber composed of a moistenable-thermal adhesive resin) . The thermal adhesive fiber constituting the surface layer may also contain an additive, as is the case with the substrate layer.

The thermal adhesive fiber constituting the surface layer may have the same average fineness as that of the thermal adhesive fiber constituting the substrate layer. In order to increase the density of the surface layer, the thermal adhesive fiber constituting the surface layer may have a fiber diameter smaller than the thermal adhesive fiber constituting the substrate layer, and is, for example, about 0.01 to 5.5 dtex, preferably about 0.1 to 3.3 dtex, and more preferably about 0.2 to 1.7 dtex. A thermal adhesive fiber having a small fineness may be a thermal adhesive fiber produced by meltblown method. A fiber having an excessively small fineness is difficult to produce, and in addition, has an insufficient fiber strength. The thermal adhesive fiber may also have the same average fiber length as that of the thermal adhesive fiber constituting the substrate layer, or may be a continuous fiber.

It is sufficient that the surface layer (the fiber aggregate nonwoven structural member) has an apparent density higher than that of the substrate layer. The surface layer may have an apparent density selected from the range of about 50 to 1000 kg/m$^3$, for example, an apparent density of about 80 to 800 kg/m$^3$, preferably about 90 to 700 kg/m$^3$ (e.g., about 100 to 600 kg/m$^3$), and more preferably about 120 to 500 kg/m$^3$ (particularly about 150 to 400 kg/m$^3$). A surface layer having an excessively low apparent density has an insufficient flexural rigidity, and thus the resulting filter (in particular, a pleated filter) has a low form or configuration stability. In contrast, for a surface layer having an excessively high density, the resulting filter has a low filterability.

The present application discloses that the apparent density ratio of the substrate layer relative to the surface layer may be selected from the range of about 1/1.1 to 1/20 in a ratio of the substrate layer/ the surface layer, and may be, for example, about 1/1.2 to 1/15, preferably about 1/1.5 to 1/10, and more preferably about 1/2 to 1/8 (particularly about 1/2.5 to 1/5). In the claimed nonwoven sheet, the apparent density ratio is 1/1.5 to 1/10. According to the present invention, the adjustment of the density ratio of the both layers improves the thinness, the form or configuration stability, and the filterability in balance.

For the surface layer, the distribution of the density (and bonded fiber ratio) in the thickness direction is not particularly limited to a specific one. The surface layer may have a uniformly distributed density, as is the case with the substrate layer, or may have an ununiformly distributed density. Moreover, in the surface layer, a portion having a uniformly distributed density and a portion having an ununiformly distributed density may be mixed. For example, as described below, a surface layer having an ununiformly distributed density can easily be formed by heat-pressing (or hot-pressing) a fiber aggregate nonwoven structural member. Among these layers, a surface layer having a density ununiformly distributed in the thickness direction is preferred. A surface layer having a density distribution decreasing or gradually decreasing from the surface toward the center is particularly preferred. A nonwoven sheet containing a surface layer having such a density distribution has an excellent adhesion (peeling resistance) between the substrate layer and the surface layer. That is, in a case where there is a drastic difference in density between the surface layer and the substrate layer, the surface layer is easily peeled from the substrate layer due to the stress strain concentrated at the interface between the both layers. A small density difference between the surface layer having a density gradient and the low-density substrate layer at the interface between the both layers allows dispersion of the stress strain between the both layers in the thickness direction. Thus, the peeling (or separation) of the both layers can be prevented. Further, since the surface layer having such a density distribution possesses a high filterability in a surface thereof and an excellent permeability in an inside thereof, the surface layer allows improvement of the durability of the resulting filter.

The bonded fiber ratio obtained by melt-bonding of the thermal adhesive fibers constituting the fiber aggregate nonwoven structural member in the surface layer is, for example, about 10 to 99%, preferably about 30 to 95%, and more preferably about 40 to 90% (particularly about 50 to 85%). The ratio of the substrate layer relative to the surface layer in bonded fiber ratio may be, for example, about 1/1.1 to 1/20, preferably about 1/1.3 to 1/10, and more preferably about 1/1.4 to 1/5 (particularly about 1/1.5 to 1/4) in a ratio of the substrate layer/the surface layer.

The surface layer has an average thickness (in a case where the surface layer is disposed on each side of the substrate layer, the average thickness means an average thickness of each one of the surface layers) of, for example, about 0.01 to 0.3 mm, preferably about 0.02 to 0.2 mm (e.g., about 0.03 to 0.15 mm), and more preferably about 0.04 to 0.1 mm (particularly about 0.05 to 0.08 mm). For a surface layer having an excessively large thickness, the resulting filter has a low lightness in weight and an insufficient thinness, and additionally has a low forming processability (e.g., pleatability). For a surface layer having an excessively small thickness, the resulting filter has a low form or configuration stability.

According to the present invention, the distribution of the density (or bonded fiber ratio) of the surface layer can be evaluated based on, for example, the cross-section of the surface layer photographed through an electron microscope. Incidentally, in a case where the interface in the electron micrograph is indistinct, the distribution can be evaluated by the method described in Examples below. That is, according to the present invention, the surface layer has a density decreasing from the surface toward the center in the thickness direction, and the substrate layer has a uniform density distribution. Thus, the density gradient is measured from the surface layer to the center of the fiber aggregate nonwoven structural member in the vertical section (the cross section in the thickness direction) of the member to determine an inflection point; the inflection point can be regarded as the interface or boundary between the substrate layer and the surface layer. In a case where there is no inflection point, the middle can be regarded as the interface or boundary between the substrate layer and the surface layer. Specifically, the surface layer having an ununiform density distribution can be identified by counting the number of fibers existing in a predetermined region in an electron micrograph (or by counting the number of fibers in each of zones divided and observing the transition of the density in the thickness direction), and thus the thickness of the surface layer can be determined. In order to determine the inflection point exactly, the zones divided may further be subdivided, and the number of fibers in each of these zones may be plotted on a graph.

The thickness ratio of the substrate layer relative to the surface layer (in a case where the surface layer is disposed on each side of the substrate layer, the thickness ratio means a thickness ratio of the substrate layer relative to each one of the surface layers) can be selected from the range of about 1/1 to 100/1 in a ratio of the substrate layer/the surface layer. The thickness ratio is, for example, about 1.2/1 to 30/1, preferably about 1.5/1 to 20/1 (e.g., about 2/1 to 15/1), and more preferably about 3/1 to 10/1 (particularly about 3.5/1 to 8/1). For an excessively large thickness ratio of the surface layer to the substrate layer, the resulting filter is easily clogged. For an excessively small thickness ratio of the surface layer to the substrate layer, the resulting filter has a low filtration efficiency and a low form or configuration stability.

[Nonwoven sheet]

The nonwoven sheet of the present invention has an excellent flexural rigidity and an excellent form or configuration stability. Specifically, in each of the longitudinal direction (machine direction: MD) and the lateral direction (cross direction: CD), the nonwoven sheet has a flexural rigidity of not more than 70 mm (e.g., not more than 65 mm), for example, not more than 60 mm (e.g., not more than 50 mm), preferably not more than 40 mm (e.g., not more than 30 mm), and more preferably not more than 27 mm (particularly not more than 15 mm). A nonwoven sheet having an excessively large flexural rigidity is too soft, and, in fabrication the nonwoven sheet is easily broken due to the weight itself and a slight load applied. Thus the nonwoven sheet is difficult to handle. In this description, the flexural rigidity can be measured by the method described in Examples below, and determined based on a displacement by gravity when a sheet of 25 mm in width and 300 mm in length is slid over so as to protrude for 100 mm from an edge of a horizontal table.

The nonwoven sheet has an excellent lightness in weight owing to the voids formed between the constituting fibers. Moreover, since these voids are not completely divided by the fibers, the nonwoven sheet has an air-permeability unlike the voids which are separated from each other in a foam resin such as a sponge. Such a structure of the nonwoven sheet is difficult for a conventional hardening process to form, such as a resin impregnation process or a process for forming a film-like structure by bonding fibers in a surface part firmly.

The nonwoven sheet has an apparent density of less than 200 $kg/m^3$, for example, about 30 to 195 $kg/m^3$, preferably about 35 to 190 $kg/m^3$ (e.g., about 40 to 190 3 3 $kg/m^3$), and more preferably about 50 to 185 $kg/m^3$ (particularly about 60 to 180 $kg/m^3$). A nonwoven sheet having an excessively low apparent density is light in weight, while the sheet has a difficulty in possessing a sufficient flexural rigidity. In contrast, a nonwoven sheet having an excessively high apparent density has a sufficient hardness, while the sheet is low in filterability.

The nonwoven sheet has a basis weight of, for example, about 20 to 500 $g/m^2$, preferably about 30 to 300 $g/m^2$ (e.g., about 35 to 250 $g/m^2$), and more preferably about 40 to 200 $g/m^2$ (particularly about 45 to 100 $g/m^2$). A nonwoven sheet having an excessively small basis weight has a low hardness. For an excessively large basis weight, the resulting filter has a low lightness in weight and an insufficient thinness and also has a low forming processability (e.g., pleatability).

The thickness (average thickness) of the nonwoven sheet may be selected from the range of about 0.35 to 1.2 mm, and, is for example, about 0.38 to 1 mm, preferably about 0.4 to 0.95 mm (e.g., about 0.42 to 0.9 mm), more preferably about 0.43 to 0.8 mm (particularly about 0.45 to 0.7 mm). For an excessively large thickness, the resulting filter has a low lightness in weight and an insufficient thinness, and also has a low forming processability (e.g., pleatability). For an excessively small thickness, the resulting filter has a low form or configuration stability.

For a filter use, lamination of a surface film having an air-permeability on the nonwoven sheet of the present invention has an advantage as follows: air between the surface film and the nonwoven fabric member (the nonwoven sheet) can pass through the structural member, due to the air-permeability of the fiber aggregate nonwoven structural member, to avoid detachment or separation of the surface film after adhesion. Moreover, such a lamination also has an advantage as follows: since the adhesive used for the adhesion of the film is attached (or bonded) to the constituting fibers existing in the surface of the fiber aggregate nonwoven structural member and enters the space between the fibers to serve as wedge, firm adhesion of the surface film to the fiber aggregate nonwoven structural member can be achieved.

The nonwoven sheet has a high air-permeability in spite of an excellent form or configuration stability. Specifically, the nonwoven sheet has an air-permeability of not less than 10 $cc/cm^2$/second, for example, about 20 to 400 $cc/cm^2$/second (e.g., about 50 to 250 $cc/cm^2$/second), preferably about 30 to 350 $cc/cm^2$/second (e.g., about 50 to 200 $cc/cm^2$/second), and more preferably about 50 to 350 $cc/cm^2$/second (particularly about 100 to 300 $cc/cm^2$/second). For a nonwoven sheet having an excessively small air-permeability, it is necessary to apply an outside pressure to the nonwoven sheet in order that air may pass through the nonwoven sheet; this is not preferred because natural passage of air is not allowed. In contrast, a nonwoven sheet having an excessively large air-permeability has too large voids among fibers in the nonwoven sheet, and thus it is difficult to maintain a sufficient flexural rigidity.

The nonwoven sheet of the present invention is used as a filter. The nonwoven sheet may have an air-flow resistance of not more than 30 Pa as a pressure drop in a filter performance test. The air-flow resistance is, for example, not more than 25 Pa, preferably not more than 20 Pa (e.g., about 3 to 18 Pa), and more preferably not more than 4 to 15 Pa (particularly about 5 to 15 Pa). Moreover, the air-flow resistance can be selected as usage. For a gas filter, in a use requiring the durability (filter life), the nonwoven sheet may have an air-flow resistance of not less than 10 Pa, preferably about 0 to 8 MPa, and more preferably about 1 to 5 Pa. An excessively large air-flow resistance makes the resulting filter cloggy. In contrast, for an excessively small air-flow resistance, the resulting filter cannot capture dust, and is less liable to maintain the filter effect.

In a case where the nonwoven sheet has a lamination structure of the substrate layer and the surface layer, the both layers may be united by a conventional adhesive. In terms of an excellent form or configuration stability, the nonwoven sheet preferably has a structure in which the both layers are in direct contact with each other without any adhesive (as described below, a structure in which the lamination structure is formed by heat-pressing or high-temperature water vapor).

[Process for producing nonwoven sheet]

It is sufficient that the process for producing the nonwoven sheet of the present invention contains a melt-bonding step of heating a nonwoven web composed of a thermal adhesive fiber to melt-bond the thermal adhesive fibers, thereby giving a plate-like fiber aggregate nonwoven structural member. A nonwoven sheet containing the substrate layer alone may be produced by substantially only the melt-bonding step.

In the melt-bonding step, the nonwoven web (fiber web) composed of the thermal adhesive fiber may be formed by a direct method (such as spun-bonding or meltblown method) or may be formed from a staple fiber by a dry method (such as carding or air-laid method). The staple fiber web may include a random web, a semi-random web, a parallel web, a cross-wrap web, and others. Among them, in the light of easy melt-bonding of bundled fibers required for the present invention, the staple fiberwebpreferably includes a semi-random web, a parallel web, or a cross-wrap web.

It is sufficient that the resulting fiber web is heated at a temperature of not lower than the melting point or softening point of the thermal adhesive fiber to melt-bond and fix the thermal adhesive fibers. The fiber web may be heated (dry-heated) using hot air, a hot plate, a heat roller, or other means, for example, at a temperature of not lower than 100°C, preferably about 120 to 250°C, and more preferably about 150 to 200°C. In order to melt-bond the fibers uniformly in the thickness direction of the fiber aggregate nonwoven structural member, the nonwoven web is preferably heated by a high-temperature water vapor.

In heating of the nonwoven web by a high-temperature water vapor, the obtained fiber web is then conveyed (or carried) to the next step by a belt conveyor and is exposed to a flow of a high-temperature vapor (a high-pressure steam) to produce a fiber aggregate nonwoven structural member. The belt conveyor to be used is not particularly limited to a specific one as far as the conveyor can principally carry the fiber web in order to subject the web to the high-temperature water vapor treatment while compressing the web to an objective density. The preferably used one includes an endless conveyer.

A first conveyor may have a first vapor spraying apparatus for supplying the fiber web (hereinafter, abbreviated as "web") with the vapor disposed behind the conveying surface thereof to supply the web with the vapor through the conveyor net, and a second conveyor may have a first suction box disposed behind the conveying surface thereof, being opposite to the first vapor spraying apparatus, to remove a surplus vapor which has passed through the web. In addition, in order to treat the both surfaces of the web with the vapor at once, the first conveyer may have a second suction box disposed behind the conveying surface, being distanced from the first vapor spraying apparatus in the traveling direction of the web, and the second conveyer may have a second vapor spraying apparatus disposed behind the conveying surface, being distanced from the first suction box disposed in the web traveling direction and opposite to the second suction box. An alternative process for subjecting the both surfaces of the fiber aggregate nonwoven structural member to the vapor treatment without the second vapor spraying apparatus and the second suction box in the web traveling direction is as follows: passing the fiber aggregate nonwoven structural member through the clearance between the first vapor spraying apparatus and the first suction box to subject a surface of the member to the vapor treatment; reversing the obtained member; and passing the reversed member through therebetween to subject another surface of the member to the vapor treatment.

The endless belt to be used for the conveyer is not particularly limited to a specific one as far as the belt does not hinder the transport of the web or the high-temperature vapor treatment. Since the shape (or pattern) of the surface of the belt is sometimes transcribed on the surface of the fiber aggregate nonwoven structural member depending on the condition of the high-temperature vapor treatment, the belt may suitably be selected. For example, for producing a fiber aggregate nonwoven structural member having a flat surface, a net having a fine mesh is used as the belt. In this case, the upper limit of the mesh count of the net is about 90 mesh. The net having a mesh count more than above-mentioned number is not preferred, which has a low air-permeability and makes it difficult to allow the vapor to pass therethrough. The preferred material of the mesh belt in terms of heat resistance for the water vapor treatment or the like includes, for example, a metal, a polyester-series resin treated for heat resistance, and a heat resistant resin such as a poly(phenylene sulfide), a polyarylate, or a fully aromatic polyester.

The high-temperature water vapor is an air (or gaseous) flow and enters the inside of the web being treated without moving the fibers thereof greatly (like a hydroentangling or a needle-punching). Presumably, this vapor entering effect and moisture-heat effect bring the surface of each fiber of the web into a moisture-heat state with the water vapor flow to form a uniform melt-bond of the fibers. Moreover, the time of the treatment which is conducted under the high-speed air flow is so short that the heat of the water vapor is conducted quickly to the surface of the fiber but not very quickly to the inside thereof. For that reason, the thermal adhesion under moisture is completed before deformation (such as crush of the whole fiber to be treated) due to the pressure or heat of the high-temperature water vapor.

In order to ensure the flexural rigidity of the fiber aggregate nonwoven structural member, it is important that before and during the treatment in which the web is supplied with the high-temperature water vapor, the web to be treated be compressed between the conveyer belts or rollers for adjusting an objective apparent density (i.e., an apparent density of less than 200 kg/m$^3$), and the compressed fiber web be exposed to the high-temperature water vapor with keeping the obtained apparent density. In particular, for producing a fiber aggregate nonwoven structural member having a high density, it is necessary that before and during the treatment, the fiber web to be treated be compressed by a sufficient pressure. Moreover, manipulating a clearance between two rollers or conveyers can adjust the thickness or density of the fiber aggregate nonwoven structural member to an objective one. In case of the conveyers, since the conveyers are not suitable for compressing the web at once, it is preferred that the conveyers be strained to obtain a tense as high as possible, and the clearance therebetween be narrowed gradually in the traveling direction of the fiber web before the vapor treatment starts. Moreover, a fiber aggregate nonwoven structural member having desired flexural rigidity and air-permeability may be produced by the adjustment of the steam pressure or processing speed.

In order to increase the hardness of the fiber aggregate nonwoven structural member, a stainless-steel plate is disposed behind the conveying surface of the endless belt, being opposite to the nozzle disposed behind the conveying surface of another endless belt from the web, to form a structure preventing the water vapor from leaking or flowing over. In such a structure, the vapor which has once passed though the web as an object to be treated is returned to the web by the plate deposed behind the endless belt, whereby the heat retained by the returned water vapor allows the fibers of the web to bond to each other firmly. On the other hand, for achieving a moderate bond of the fibers, a suction box is disposed behind conveying surface of the endless belt, instead of the plate, to remove a surplus water vapor.

For spraying the high-temperature water vapor, a plate or die having a plurality of predetermined orifices arranged in a line in a width direction thereof is used as the nozzle, and the plate or die is disposed to arrange the orifices in the width direction of the web to be conveyed. The plate or die may have at least one orifice line or a plurality of orifice lines, being parallel to each other. Moreover, it is possible that a plurality of nozzle dies, each having one orifice line, be disposed being parallel to each other.

The thickness of the plate may be selected according to the type of the nozzle. For example, a plate nozzle having orifices formed therein may have a thickness of about 0.5 to 1.0 mm. For this type of the plate, the diameter of the orifice or the pitch between the orifices is not particularly limited to a specific one as far as the diameter or pitch thereof can provide the objective bond of the fibers. The diameter of the orifice is usually, about 0.05 to 2.0 mm, preferably about 0.1 to 1.0 mm, and more preferably about 0.2 to 0.5 mm. The pitch between the orifices is, for example, about 0.5 to 3.0 mm, preferably about 1.0 to 2.5 mm, and more preferably about 1.0 to 1.5 mm. An excessively small diameter of the orifice makes the processing difficult due to a low accuracy of processability for the nozzle and frequently causes clogging of the orifice. An excessively large diameter of the orifice has a difficulty in obtaining a sufficient water vapor power. On the other hand, an excessively small pitch between the orifices makes the distance between nozzle holes so close that the strength of the nozzle is decreased. An excessively large pitch between the orifices causes a possible insufficient contact of a high-temperature water vapor with the web, whereby it is difficult to ensure the strength of the obtained web.

The temperature of the high-temperature water vapor may be, for example, about 70 to 150°C, preferably about 80 to 120°C, and more preferably about 90 to 110°C. The pressure (jet pressure) of the high-temperature water vapor is not particularly limited to a specific one as far as an objective bonding state of the fibers can be achieved. The pressure of the high-temperature water vapor is, according to the quality of material or form of the fiber to be used, for example, about 0.1 to 2.0 MPa, preferably about 0.2 to 1.5 MPa, and more preferably about 0.3 to 1.0 MPa. An excessively high pressure of the vapor disturbs the arrangement of the fibers constituting the web, whereby the fabric appearance or texture of the web is destroyed or a partial deformation of the fiber easily occurs due to excessive melting. An excessively weak pressure of the vapor fails to impart a quantity of heat necessary for melt-bonding the fibers to an object to be treated, or fails to pass the water vapor through the web, whereby the drifting water vapor in the web easily forms a melt-bond spot or fleck in the thickness direction. In addition, it is also difficult to control the uniform jetting with the water vapor form the nozzle.

A characteristic of the process for producing a thin plate-like fiber aggregate nonwoven structural member may be gradual narrowing the clearance between the conveyers in the traveling direction. The thin fiber aggregate nonwoven structural member may be produced by setting an objective thickness at the upstream and adjusting the steam pressure or processing speed.

Sometimes the fiber aggregate nonwoven structural member has water remaining therein after the fibers of the web are partly bonded by the application of moisture and heat according to such a process. If necessary, the obtained fiber aggregate nonwoven structural member may be dried. The drying is not particularly limited to specific one as far as the fibers of the surface of the board (fiber aggregate nonwoven structural member) can maintain the form of the fibers without film formation after contact with a heating element for drying. For the drying, there may be used a large-scale dryer which is used for drying a nonwoven fabric, such as a cylinder dryer or a tenter dryer. Since the amount of the water remaining in the fiber aggregate nonwoven structural member is practically so small that the fiber aggregate nonwoven structural member can be dried by a relatively simple drying means, the drying preferably used is a non-contacting process (e.g. , a far infrared rays irradiation, a microwave irradiation, and an irradiation of electron beam) or a process employing a hot air.

If necessary, a conveyor belt may be provided with a pattern (such as a predetermined irregular pattern, character, orpicture (or graphic)) . Using such a conveyor, the above-mentioned pattern may be transcribed on the surface of the fiber aggregate nonwoven structural member to impart a design to the obtained fiber aggregate nonwoven structural member. In addition, the fiber aggregate nonwoven structural member and other materials may be laminated to produce a laminated product, or the fiber aggregate nonwoven structural member may be formed (or molded) into a desired shape.

The plate-like fiber aggregate nonwoven structural member obtained by the melt-bonding step may be used alone as a nonwoven sheet. The nonwoven sheet may have a lamination structure containing a substrate layer and a surface layer on at least one side of the substrate layer; the surface layer is formed from a fiber aggregate nonwoven structural member having a density higher than that of the substrate layer. The nonwoven sheet having such a lamination structure may be produced by unifying a substrate layer composed of the plate-like fiber aggregate nonwoven structural member obtained in the melt-bonding step and a separately produced surface layer through an adhesive or a pressure sensitive adhesive or a clamp (or a brace). In the light of improved adhesion between the layers, the process for producing the nonwoven sheet having the lamination structure preferably contains a heat-pressing step of heat-pressing at least one side of the plate-like fiber aggregate nonwoven structural member obtained in the melt-bonding step, or a laminating step of laminating another plate-like fiber aggregate nonwoven structural member consisting of a thermal adhesive fiber on at least one side of the plate-like fiber aggregate nonwoven structural member obtained in the melt-bonding step and then thermal-bonding these members by heating.

In the process containing the former heat-pressing step, the heat-pressing manner may include a conventional manner, for example, using a heat roller, and pressing with a hot plate. Moreover, the heat-pressing may include a hot-press molding under moisture. Further, in a case where the surface layer is disposed on each side of the substrate layer, both sides of the plate-like fiber aggregate nonwoven structural member may be pressed with heat rollers, in terms of productivity or the like.

As the heat-pressing condition, the heating temperature may suitably be selected depending on the species of the thermal adhesive fiber as far as the density can be increased at or near the surface of the plate-like fiber aggregate nonwoven structural member. For example, the heating temperature is about 50 to 150°C, preferably about 55 to 120°C, and more preferably about 60 to 100°C (particularly, about 70 to 90°C). The pressure for pressing may be selected from about not more than 100 MPa, and is, for example, about 0.01 to 10 MPa, preferably about 0.05 to 5 MPa, and more preferably about 0.1 to 1 MPa (particularly, about 0.15 to 0.8 MPa). In a case where a heat roller is used, the plate-like fiber aggregate nonwoven structural member may be compressed so that the thickness after heat-pressing relative to the thickness before heat-pressing may be, for example, about 1/1.1 to 1/3, preferably about 1/1.2 to 1/2.5, and more preferably about 1/1.3 to 1/2. The pressing time is, for example, about 3 seconds to 3 hours, preferably about 10 seconds to 1 hour, and more preferably about 30 seconds to 20 minutes.

In the process containing the latter laminating step, it is sufficient that another fiber aggregate nonwoven structural member is a fiber aggregate nonwoven structural member consisting of a thermal adhesive fiber. In the light of an excellent adhesion to the plate-like fiber aggregate nonwoven structural member obtained in the melt-bonding step, another fiber aggregate nonwoven structural member preferably includes a fiber aggregate nonwoven structural member consisting of the same species or the same thermal adhesive fiber as the thermal adhesive fiber constituting the plate-like fiber aggregate nonwoven structural member. The basis weight or density of another fiber aggregate nonwoven structural member may suitably be selected according to an objective density of the surface layer. In terms of easy format ion of a surface layer having a high density, a meltblown nonwoven fabric is preferred.

The manner for heating the laminated product for thermal-bonding is not particularly limited to a specific one. According to the species of the thermal adhesive fiber, a dry heat adhesion using hot air or others, or a wet heat adhesion (or a thermal adhesion under moisture) using a high-temperature water vapor may be used. Among these manners, in terms of adhesion of these fiber aggregate nonwoven structural members at a high adhesion without decrease of filterability, the heat adhesion using a high-temperature water vapor is preferred. The adhesion of the members constituting the laminated product is achievable by the heat treatment under the condition as the same as the condition of the above-mentioned melt-bonding step. The laminated product obtained in the laminating step may be subjected to the above-mentioned heat-pressing step to adjust the density of the fiber aggregate nonwoven structural member to a high density.

Further, according to the present invention, a nonwoven sheet having a lamination structure may be formed by heat-pressing at least one side of the fiber aggregate nonwoven structural member in the melt-bonding step. The heat-pressing manner may include a conventional manner, for example, using a heat roller, and pressing with a hot plate. Moreover, the heat-pressing may include a hot-press molding under moisture. Further, in a case where the surface layer is disposed on each side of the substrate layer, both sides of the fiber aggregate nonwoven structural member may be pressed with heat rollers, in terms of productivity or the like.

As the heat-pressing condition, it is sufficient that the heating temperature is not lower than the melting point or softening point of the thermal adhesive fiber. In order to melt-bond the fiber existing in the inside of the structural member, the heating temperature is, for example, about 100 to 250°C, preferably about 130 to 230°C, and more preferably about 150 to 200°C (particularly about 160 to 180°C) . The pressure for pressing may be selected from about not more than 100 MPa, and is, for example, about 0.01 to 10 MPa, preferably about 0.05 to 5 MPa, and more preferably about 0.1 to 1 MPa (particularly about 0.15 to 0.8 MPa). In a case where a heat roller is used, the plate-like fiber aggregate nonwoven structural member may be compressed so that the thickness after heat-pressing relative to the thickness before heat-pressing may be, for example, about 1/1.1 to 1/3, preferably about 1/1.2 to 1/2.5, and more preferably about 1/1.3 to 1/2. The pressing time is, for example, about 1 second to 1 hour, preferably about 3 seconds to 10 minutes, and more preferably about 5 seconds to 1 minute (particularly about 10 to 30 seconds).

Among these processes, in terms of an excellent form or configuration stability, a particularly preferred one includes the process containing the heat-pressing step of heat-pressing at least one side of the plate-like fiber aggregate nonwoven structural member obtained in the melt-bonding step.

Thus obtained nonwoven sheet of the present invention has an excellent flexural rigidity and an excellent formability although the thickness of the nonwoven sheet is the same level as that of a conventional nonwoven fabric. Further, the nonwoven sheet also has an air-permeability and a small air-flow resistance, and making use of such characteristics of the nonwoven sheet, the nonwoven sheet is used for a filter material. In particular, since the form or configuration stability and the formability in the thin nonwoven sheet can be compatible with the filterability, the nonwoven sheet is suitable for a pleated filter.

For the pleated filter (a filter having a pleated form), the pitch of each protrusion (cross-sectional triangular shape) of the pleats (or accordion pleats) (the distance or interval between adjacent tops) may be selected according to the species of the filter and is, for example, about 5 to 50 mm, preferably about 10 to 40 mm, and more preferably about 15 to 30 mm. Each protrusion (or pleat) has a height of, for example, about 5 to 60 mm, preferably about 10 to 50 mm, and more preferably about 15 to 40 mm. Each protrusion has a vertical angle of, for example, about 3 to 70°, preferably about 5 to 60°, and more preferably about 10 to 50°. According to the present invention, even in a case where the filter is in a pleated form having such a vertical angle, the filter can maintain the form or configuration stability over a long period of time. For example, deformation of each protrusion or contact of adjacent tops with each other due to falling down of the pleats is prevented, and the pleated form can be retained.

EXAMPLES

Hereinafter, the following examples are intended to describe this invention in further detail and should by no means be interpreted as defining the scope of the invention. The values of physical properties in Examples were measured by the following methods.

(1) Basis weight, thickness, apparent density

In accordance with JIS L1913, the basis weight and the thickness of the fiber aggregate nonwoven structural member were measured, and the apparent density was calculated from these values.

The thickness of the surface layer of the sheet prepared by the heat-pressing process was visual ly measured using a scanning electron microscope (SEM).

(2) Air-permeability

In accordance with A Method (Frazier method), which is a testing method for woven fabrics described in JIS L1096, the air-permeability of a sample having a size of 2 100 cm$^2$ was measured under a pressure of 125 Pa using an air-permeability tester for fabric (manufactured by Toyo Seiki Seisaku-Sho, Ltd., Frazier Permeameter).

(3) Flexural rigidity

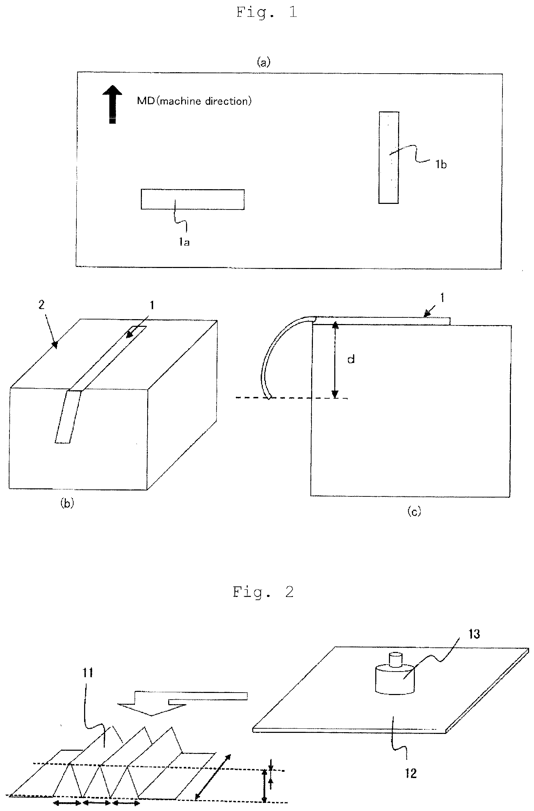

Fig. 1 shows a method for measuring flexural rigidity. Fig. 1(a) is a plane view showing a method for preparing a measuring sample 1. As a cross-directional (CD) sample 1a, a sample of 25 mm in width and 300 mm in length was prepared so that the longitudinal direction of the sample was parallel to the cross direction. As a machine-directional (MD) sample 1b, a sample of 25 mm in width and 300 mm in length was prepared so that the longitudinal direction of the sample was parallel to the machine direction.

Fig. 1 (b) and Fig. 1 (c) are a schematic perspective view and a schematic side elevational view, respectively, for showing a method for measuring flexural rigidity. A measuring sample 1 was slid over so as to protrude for 100 mm from an edge of a horizontal table 2. The drooping degree of an end of the sample (the distance d between the plane of the horizontal table and the drooping end of the sample) was measured. The measuring sample was turned over, and the flexural rigidity was measured in the same manner. The experimental value was the average of values measured in both sides of the sample.

(4) Forming processability

A sample of 30 cm in length and 30 cm in width was prepared and preheated at 120°C for 60 seconds in an air-heating furnace. Then, the sample was subjected to mold pressing using a room-temperature metal mold at an air pressure of 5.5 kg/cm$^2$ for 10 seconds. The molded sample was evaluated for the state after forming, and measured for the height of the molded product, and the slippage of the sample into the mold (the difference in length between the sample and the mold). The state of forming was visually observed and evaluated on the basis of the following criteria.

A: The sample is molded.
B: The sample is molded, but there is a slippage of the sample into the mold.
C: The sample is not molded.

(5) Filtration efficiency and air-flow resistance

Quartz (particle size: 1.0 $\mu$m) was passed across a sample fixed in a measuring cell at a face velocity of 8.6 cm/second using a filter performance tester. The differential pressure (pressure drop) at a flow rate of 30 liters/minute was measured by a micro-differential pressure gauge connected upstream and downstream of the measuring cell. The dust concentrations in the upstream and downstream side of the measuring cell were measured under the same condition as that for the air-flow resistance by a light-scattering dust monitor (mass density meter), and the filtration efficiency was determined from the difference in concentration between the upstream and downstream sides of the measuring cell.

(6) Bonded fiber ratio

The bonded fiber ratio was obtained by the following method: taking a macrophotography of the cross section with respect to the thickness direction of a structural member (100 magnifications) with the use of a scanning electron microscope (SEM); dividing the obtained macrophotography in a direction perpendicular to the thickness direction equally into three; and in each of the three area [a surface area, an central (middle) area, a backside area], calculating the proportion (%) of the number of the cross sections of two or more fibers melt-bonded to each other relative to the total number of the cross sections of the fibers (end sections of the fibers) by the formula mentioned below. Incidentally, in the contact part or area of the fibers, the fibers just contact with each other or are melt-bonded. The fibers which just contacted with other disassembled at the cross section of the structural member due to the stress of each fiber after cutting the structural member for taking the microphotography of the cross section. Accordingly, in the microphotography of the cross section, the fibers which still contacted with each other was determined as being bonded.

```
Bonded fiber ratio (%)

= (the number of the cross sections of the fibers in which two or more fibers are bonded) / (the total

number of the cross sections of the fibers) x 100;
```

providing that in each microphotography, all cross sections of the fibers were counted, and when the total number of the cross sections of the fibers was not more than 100, the observation was repeated with respect to macrophotographies which was taken additionally until the total number of the cross sections of the fibers became over 100. Incidentally, the bonded fiber ratio of each area was calculated, and the ratio of the minimum value relative to the maximum value (the minimum value/the maximum value) was also calculated.

(7) Pleatability

A nonwoven sheet of 10 cm in width was accordion-folded (or was formed in the shape of bellows by alternately repeating mountain fold and valley fold) at intervals of 3 cm in the longitudinal direction. The foldability of the sheet was evaluated on the basis of the following criteria.

A: The sheet is easily folded.
B: The sheet is too thick to be folded.
C: The sheet is too hard to be folded.
D: The sheet is easily folded, but fails to maintain a folded state thereof.

(8) Load deformation of pleated product

As shown in Fig. 2, a pleated sample 11 produced in (7) Pleatability was used. The sample 11 was placed on a table, and the valley folds were fixed so that three mountain folds were arranged at intervals of 2.5 cm (height of mountain fold: 28 mm, vertical angle of mountain fold: 50°). A weight 13 was placed on an acrylic board 12 having a size of 13 cm x 13 cm to give a load board having a total weight of 100 g. The load board was laid on the three mountain folds. The height of the mountain fold (the distance from the table to the top of the mountain) was measured to determine a sinking deformation.

(8) Liquid permeability

The time required for 100 cc of water to be passed through a nonwoven fabric sample having a filtration area of 21.8 mm in diameter was measured.

(9) Friction resistance

In accordance with JIS L0849, the surface of the nonwoven sheet was rubbed with a test fabric cotton Kanakin No. 3 using a friction tester type II (color fastness), and the number of rubbing required for the peeling-off of the surface of the nonwoven sheet was measured.

[Example 1]

A sheath-core form conjugated staple fiber ("Sofista" manufactured by Kuraray Co., Ltd., 3.3 dtex, 51 mm in length) was prepared as a moistenable-thermal adhesive fiber. The core component of the conjugated staple fiber comprised a poly (ethylene terephthalate) and the sheath component of the conjugated staple fiber comprised an ethylene-vinyl alcohol copolymer (the ethylene content was 44 mol%, the degree of saponification was 98.4 mol%, and the mass ratio of the sheath relative to the core was 50/50).

Using the sheath-core form conjugated staple fiber (100% by mass), a web was prepared by a semi-random carding process. Then four sheets of the webs were put in layers to give a card web having a total basis weight of about 125 g/m².

The resulting card web was transferred to a belt conveyor equipped with a 50-mesh stainless-steel endless net having a width of 500 mm.

Incidentally, the belt conveyor comprised a pair of a lower conveyor and an upper conveyor. Each of the lower and upper conveyors had a vapor spray nozzle disposed in the middle of the conveyor belt. Each of the lower and upper conveyors was equipped with a metal roll for regulating the web thickness (hereinafter, "web thickness regulator roll") distanced from the nozzle in a direction opposite to the web-traveling direction. The web thickness regulator roll of the upper conveyor was disposed as a counterpart of the web thickness regulator roll of the lower conveyor. The lower conveyor had a top conveyor surface (that is, a surface on which the web contacted or traveled) which was flat. On the other hand, the upper conveyor had a down conveyor surface (that is, a surface on which the web contacted or traveled) which curved along the web thickness regulator roll.

Moreover, the upper conveyor was vertically movable, and thus the distance between the web thickness regulator of the upper conveyor and that of the lower conveyor was adjusted to a prescribed one. Furthermore, the upper conveyor was inclined (or crooked) at the web thickness regulator roll at an angle of 30° against the web-traveling direction (against the down conveyor surface in the web-traveling direction of the upper conveyor). The curved or bent part was followed by a flat or straight part parallel to the lower conveyors in the downstream side. Incidentally, the upper conveyor was vertically moved, maintaining a parallel relation to the lower conveyor.

These belt conveyors moved at the same speed in the same direction and formed a structure in which the conveyor belts and the web thickness regulator rolls compressed the fiber web with maintaining a prescribed clearance. Such a structure allowed adjustment of the web thickness before a water vapor treatment, like a calender step. That is, the card web was fed into the above-mentioned structure to be carried by the lower conveyor forming the clearance with the upper conveyor. The clearance became gradually narrow toward to the web thickness regulator rolls. While the card web was passing through the clearance which was thinner than the thickness of the card web, the thickness of the card web was gradually reduced to substantially the same as the clearance formed between the web thickness regulator rolls by compressing the card web by the upper and lower belt conveyors. While the card web was being carried between the belt conveyors in the traveling direction of the card web, the card web was subjected to the water vapor treatment with maintaining the obtained thickness. In this process, the linear load of the web thickness regulator roll was adjusted to 50 kg/cm.

Then the card web was carried to be subjected to the water vapor treatment by the water vapor spray apparatus disposed behind the lower conveyor. The water vapor treatment was conducted by jetting a high-temperature water vapor having a temperature of 80°C and a pressure of 0.2 MPa from the apparatus to the card web and allowing the high-temperature water vapor to pass through the card web, whereby a fiber aggregate nonwoven structural member was obtained. The water vapor spray apparatus had a first nozzle disposed behind the lower conveyor to spray with the high-temperature water vapor through the conveyor net and a first suction unit which was disposed behind the upper conveyor. Furthermore, the both sides of the card web were treated with the water vapor by the use of another spray apparatus which was disposed, being distanced from the first one in the web-traveling direction. That is, the spray apparatus had a second nozzle disposed behind the upper conveyor, being distanced from the first one in the web-traveling direction and a second suction unit which was disposed behind the lower conveyor, being distanced from the first one in the web-traveling direction.

Incidentally, the water vapor spray apparatus which was used had a plurality of nozzles, each having a pore size of 0.3 mm, arrayed in a line along the width direction of the conveyor at 1 mm pitch. The speed of treatment was 5 m/minute, and the distance between the nozzle side of the upper conveyor belt and the suction side of the lower conveyor belt was 1 mm.

The obtained fiber aggregate nonwoven structural member (the nonwoven sheet composed of the substrate layer alone) had a very thin plate-like shape having a thickness of 0.85 mm, and had an excellent air-permeability, a stiffness against bending, and a good forming processability.

[Example 2]

A fiber aggregate nonwoven structural member was obtained in the same manner as in Example 1 except for the following: a moistenable-thermal adhesive fiber used was the same as the sheath-core form conjugated staple fiber used in Example 1 except that the fineness was 2.2 dtex. The obtained fiber aggregate nonwoven structural member had a very thin plate-like shape having a thickness of 0.92 mm, and showed the same flexural rigidity and good forming processability as those of the fiber aggregate nonwoven structural member of Example 1.

[Example 3]

A fiber aggregate nonwoven structural member was obtained in the same manner as in Example 1 except for the following: a moistenable-thermal adhesive fiber used was the same as the sheath-core form conjugated staple fiber used in Example 1 except that the fineness was 1.7 dtex. The obtained fiber aggregate nonwoven structural member had a very thin plate-like shape having a thickness of 0.99 mm, and showed the same flexural rigidity and good forming processability as those of the fiber aggregate nonwoven structural member of Example 1.

[Example 4]

A fiber aggregate nonwoven structural member was obtained in the same manner as in Example 1 except that a sheath-core form conjugated staple fiber ("Sofit PN-720" manufactured by Kuraray Co., Ltd., 2.2 dtex, 51 mm in length) was used as the moistenable-thermal adhesive fiber; where, in the conjugated staple fiber, the core component comprised a poly(ethylene terephthalate) and and the sheath component comprised a copoly(ethylene terephthalate) containing 45% by mol of isophthalic acid unit (core/sheath mass ratio = 50/50). The obtained fiber aggregate nonwoven structural member had a very thin plate-like shape having a thickness of 0.78 mm, and showed the same flexural rigidity and good forming processability as those of the fiber aggregate nonwoven structural member of Example 1.

[Comparative Example 1]

A fiber aggregate nonwoven structural member was obtained in the same manner as in Example 1 except that three sheets of the card webs, each of which was a card web having a basis weight of about 125 $g/m^2$ obtained in Example 1, were laid on another and that each of the distance between the web thickness regulator rolls and the distance between the conveyers in the downstream side of the rolls was 3 mm. The obtained fiber aggregate nonwoven structural member had a very hard board-like shape having a thickness of 3.05 mm, which was thick compared with the structural members obtained in Examples 1 to 4. The fiber aggregate nonwoven structural member had a flexural rigidity, while there was a large slippage of the member in form processing. Thus the fiber aggregate nonwoven structural member had a low forming processability.

[Comparative Example 2]

Using the moistenable-thermal adhesive fiber described in Example 4 (100% by mass), a card web having a basis weight of about 20 $g/m^2$ was prepared. The card web was passed through an air-heating furnace to give a thermobonded nonwoven fabric sheet. The obtained nonwoven fabric sheet has a flexural rigidity insufficient for a structural member compared with the structural members obtained in Examples 1 to 4 and has no forming processability.

[Comparative Example 3]

A commercially available copy paper (manufactured by Fuji Xerox Co., Ltd.) was evaluated. The commercially available copy paper had a flexural rigidity larger than that of the nonwoven fabric sheet obtained in Comparative Example 2, while the copy paper has no forming processability. For example, the copy paper tore in fabrication.
Table 1 shows the evaluation of the nonwoven sheets of Examples 1 to 4 and Comparative Examples 1 to 3.

[Table 1]

Table 1

| | Basis weight (g/m$^2$) | Thickness (mm) | Density (kg/m$^3$) | Air-permeability (cc/cm$^2$/sec.) | Thermal adhesive Fiber ratio (%) | Forming processability | | | Flexural rigidity | | Air-flow resistance (Pa) | Filtration efficiency (%) |
| | | | | | | Formability | Height after processing (mm) | Slippage of sample into mold (mm) | MD (mm) | CD (mm) | | |
|---|---|---|---|---|---|---|---|---|---|---|---|---|
| Ex.1 | 131.8 | 0.85 | 155.2 | 94.5 | 100 | A | 33 | 10 | 2.5 | 14.5 | 9 | 8.5 |
| Ex.2 | 130.3 | 0.92 | 141.7 | 84.9 | 100 | A | 33 | 10 | 4.5 | 13.5 | 9 | 12.5 |
| Ex.3 | 125.5 | 0.99 | 125.5 | 79.8 | 100 | A | 33 | 10 | 0.5 | 7.7 | 12 | 15.7 |
| Ex.4 | 105.2 | 0.78 | 135.8 | 114.3 | 100 | A | 33 | 10 | 0.0 | 26.5 | 6 | 7.6 |
| Com.Ex. 1 | 398.5 | 3.05 | 131.0 | 47.6 | 100 | B | 32 | 30 | 1.0 | 1.0 | 21 | 22.9 |
| Com.Ex. 2 | 18.7 | 0.87 | 21.5 | 730.0 | 100 | C | 15 | 5 | 82.5 | 91.0 | - | - |
| Com.Ex. 3 | 70.0 | 0.09 | 777.7 | 0.078 | 0 | C | Torn | Torn | 21.0 | 50.5 | - | - |

[Example 5] (Reference)

A fiber aggregate nonwoven structural member was produced in the same manner as in Example 1 except that two sheets of the webs were put in layers to give a card web having a total basis weight of about 50 g/m$^2$ and that the distance between the conveyers was adjusted so as to give a structural member having a thickness of 0.8 mm.

[Comparative Example 4]

The distance between flat embossed rolls, each heated to 60°C, was adjusted so as to give a structural member having a thickness of 0.2 mm, and the fiber aggregate nonwoven structural member obtained in Example 5 was pressed by the rolls to produce a nonwoven sheet having a triple-layer structure.

[Example 6]

The distance between flat embossed rolls, each heated to 80°C, was adjusted so as to give a structural member having a thickness of 0.4 mm, and the fiber aggregate nonwoven structural member obtained in Example 5 was pressed by the rolls to produce a nonwoven sheet having a triple-layer structure.

[Example 7]

The distance between flat embossed rolls, each heated to 80°C, was adjusted so as to give a structural member having a thickness of 0.7 mm, and the fiber aggregate nonwoven structural member obtained in Example 5 was pressed by the rolls to produce a nonwoven sheet having a triple-layer structure.

[Comparative Example 5]

A fiber aggregate nonwoven structural member was produced in the same manner as in Example 1 except that a card web, being composed of four sheets of the webs put in layers and having a total basis weight of about 100 g/m$^2$, was used and that the distance between the conveyers was adjusted so as to give a structural member having a thickness of 0.8 mm. The distance between flat embossed rolls, each heated to 80°C, was adjusted so as to give a structural member having a thickness of 0.2 mm, and the resulting fiber aggregate nonwoven structural member was pressed by the rolls to produce a nonwoven sheet having a triple-layer structure.

[Example 8]

A nonwoven sheet was produced in the same manner as in Comparative Example 5 except that the distance between the flat embossed rolls was adjusted to 0.4 mm.

[Example 9]

A nonwoven sheet was produced in the same manner as in Comparative Example 5 except that the distance between the flat embossed rolls was adjusted to 0.5 mm.

[Example 10]

The same sheath-core form conjugated staple fiber as the fiber used in Example 1 except that the fineness was 1.7 dtex was used as the moistenable-thermal adhesive fiber, and a nonwoven sheet was produced in the same manner as in Example 6 (the distance between conveyers: 0.8 mm, the distance between flat embossed rolls: 0.4 mm) except for the use of the moistenable-thermal adhesive fiber.

[Example 11]

A nonwoven sheet was produced in the same manner as in Example 10 (the distance between conveyers: 0.8 mm, the distance between flat embossed rolls: 0.4 mm) except that a card web, being composed of four sheets of the webs put in layers and having a total basis weight of about 100 g/m$^2$, was used.

[Example 12]

A nonwoven sheet was produced in the same manner as in Example 11 except that the distance between the flat embossed rolls was adjusted to 0.7 mm.

[Example 13]

A nonwoven sheet was produced in the same manner as in Example 6 except that a sheath-core form conjugated staple fiber (Sofit PN-720) was used as the moistenable-thermal adhesive fiber; where, in the conjugated staple fiber, the core component comprised a poly(ethylene terephthalate) and the sheath component comprised a copoly (ethylene terephthalate) containing 45% by mol of isophthalic acid unit (core/sheath mass ratio - 50/50).

[Example 14]

A nonwoven sheet was produced in the same manner as in Example 13 (the distance between conveyers: 0.8 mm, the distance between flat embossed rolls: 0.4 mm) except that a card web, being composed of four sheets of the webs put in layers and having a total basis weight of about 100 g/m$^2$, was used.

[Example 15]

A nonwoven sheet was produced in the same manner as in Example 14 except that the distance between the flat embossed rolls was adjusted to 0.7 mm.

[Comparative Example 6]

A fiber aggregate nonwoven structural member was produced in the same manner as in Example 1 except that a card web, being composed of sixteen (16) sheets of the webs put in layers and having a total basis weight of about 400 g/m$^2$, was used and that the distance between the conveyers was adjusted so as to give a structural member having a thickness of 3.0 mm.

[Example 16]

The distance between flat embossed rolls, only one of which was heated to 80°C, was adjusted so as to give a structural member having a thickness of 0.4 mm, and the fiber aggregate nonwoven structural member obtained in Comparative Example 6 was pressed by the rolls to produce a nonwoven sheet having a double-layer structure.

[Example 17]

A meltblown nonwoven fabric [Kuraray Co., Ltd., a nonwoven fabric composed of an ethylene-vinyl alcohol copolymer (ethylene content: 44% by mol, degree of saponification: 98.4% by mol) fiber having an average fiber diameter of 6 $\mu$m; basis weight: 50 g/m$^2$, thickness: 0.5 mm] was provided. The meltblown nonwoven fabric was laminated on one side of the fiber aggregate nonwoven structural member obtained in Example 5 to give a laminated product. The distance between the conveyers was adjusted so as to give a structural member having a thickness of 0.8 mm, and then the laminated product was treated with a high-temperature water vapor at 0.2 MPa in the same manner as in Example 1 to produce a nonwoven sheet having a double-layer structure.

[Example 18]

The distance between flat embossed rolls, each heated to 80°C, was adjusted so as to give a structural member having a thickness of 0.4 mm, and the fiber aggregate nonwoven structural member obtained in Example 17 was pressed by the rolls to produce a nonwoven sheet having a triple-layer structure.

[Example 19]

A nonwoven sheet having a double-layer structure was produced in the same manner as in Example 17 expect that the fiber aggregate nonwoven structural member obtained in Comparative Example 5 was used instead of the fiber aggregate nonwoven structural member obtained in Example 5. Incidentally, the fiber aggregate nonwoven structural member obtained in Comparative Example 5 was produced in the same manner as in Example 1 except that a card web, being composed of four sheets of the webs put in layers and having a total basis weight of about 100 g/m², was used and that the distance between the conveyers was adjusted so as to give a structural member having a thickness of 0.8 mm.

[Example 20]

The distance between flat embossed rolls, each heated to 80°C, was adjusted so as to give a structural member having a thickness of 0.5 mm, and the fiber aggregate nonwoven structural member obtained in Example 19 was pressed by the rolls to produce a nonwoven sheet having a triple-layer structure.

[Example 21]

A sheath-core form conjugated staple fiber ("Sofista" manufactured by Kuraray Co., Ltd., 3.3 dtex, 51 mm in length) was prepared as a moistenable-thermal adhesive fiber. The core component of the conjugated staple fiber comprised a poly(ethylene terephthalate) and the sheath component of the conjugated staple fiber comprised an ethylene-vinyl alcohol copolymer (the ethylene content was 44 mol%, the degree of saponification was 98.4 mol%, and the mass ratio of the sheath relative to the core was 50/50). Using the sheath-core form conjugated staple fiber (100% by mass), a web was prepared by a semi-random carding process. Then two sheets of the webs were put in layers to give a card web having a total basis weight of about 50 g/m². The card web was compressed by a dry-heat pressing plate for 10 seconds at a temperature of 170°C and a pressure of 0.4 MPa so as to give a structural member having a thickness of 0.5 mm. Thus a nonwoven sheet was produced.

[Example 22]

A nonwoven sheet was produced in the same manner as in Example 21 except that a card web, being composed of four sheets of the webs put in layers and having a total basis weight of about 100 g/m², was used.

[Comparative Example 7]

A fiber aggregate nonwoven structural member was produced in the same manner as in Example 1 except that a card web, being composed of eight (8) sheets of the webs put in layers and having a total basis weight of about 200 g/m², was used and that the distance between the conveyers was adjusted so as to give a structural member having a thickness of 0.8 mm.

[Comparative Example 8]

The distance between flat embossed rolls, each heated to 80°C, was adjusted so as to give a structural member having a thickness of 0.6 mm, and the fiber aggregate nonwoven structural member obtained in Comparative Example 7 was pressed by the rolls to produce a nonwoven sheet having a triple-layer structure.

[Comparative Example 9]

A commercially available dust-collecting filter for air purifier (manufactured by Hitachi, Ltd. "EPF-DV1000H") was used as a nonwoven sheet.

[Comparative Example 10]

From a commercially available dust-collecting filter for air purifier (manufactured by Hitachi, Ltd. "EPF-DV1000H"), a high-density surface layer was peeled off. The remaining substrate layer alone was used as a nonwoven sheet.

[Comparative Example 11]

A commercially available aquarium filter (manufactured by Eheim, "Filter for 2213") was used as a nonwoven sheet.

Tables 2 and 3 show the evaluation of the nonwoven sheets of Examples 5 to 22 and Comparative Examples 4 to 11.

[Table 2]

Table 2

| | Step | Fineness | Layer structure | Nonwoven sheet Total basis weight (g/m²) | Total thickness (mm) | Total density (kg/m³) | First surface layer Thickness (mm) | Density (kg/m³) | Bonded fiber ratio (%) | Substrate layer Thickness (mm) | Density (kg/m³) | Bonded fiber ratio (%) | Second surface layer Thickness (mm) | Density (kg/m³) | Bonded fiber ratio (%) |
|---|---|---|---|---|---|---|---|---|---|---|---|---|---|---|---|
| (Reference) Ex.5 | SJ alone | 3.3T | Single | 44.2 | 0.73 | 61 | - | - | - | 0.73 | 61 | 15 | - | - | - |
| Com.Ex.4 | SJ+calender | 3.3T | Triple | 46.2 | 0.22 | 210 | 0.045 | 347 | 80 | 0.13 | 115 | 38 | 0.045 | 347 | 80 |
| Ex.6 | SJ+calender | 3.3T | Triple | 46.8 | 0.47 | 99 | 0.070 | 191 | 55 | 0.33 | 60 | 15 | 0.070 | 191 | 55 |
| Ex.7 | SJ+calender | 3.3T | Triple | 44.9 | 0.68 | 66 | 0.070 | 106 | 40 | 0.54 | 56 | 14 | 0.070 | 106 | 40 |
| Com.Ex.5 | SJ+calender | 3.3T | Triple | 84.4 | 0.32 | 264 | 0.060 | 514 | 82 | 0.19 | 97 | 30 | 0.060 | 514 | 82 |
| Ex.8 | SJ+calender | 3.3T | Triple | 85.5 | 0.47 | 182 | 0.070 | 377 | 78 | 0.33 | 98 | 30 | 0.070 | 377 | 78 |
| Ex.9 | SJ+calender | 3.3T | Triple | 87.6 | 0.55 | 159 | 0.055 | 393 | 79 | 0.44 | 101 | 31 | 0.055 | 393 | 79 |
| Ex.10 | SJ+calender | 1.7T | Triple | 52.7 | 0.45 | 117 | 0.065 | 266 | 68 | 0.32 | 57 | 15 | 0.065 | 266 | 68 |
| Ex.11 | SJ+calender | 1.7T | Triple | 94.6 | 0.48 | 197 | 0.070 | 417 | 81 | 0.34 | 94 | 27 | 0.070 | 417 | 81 |
| Ex.12 | SJ+calender | 1.7T | Triple | 105.8 | 0.89 | 119 | 0.050 | 246 | 67 | 0.79 | 105 | 29 | 0.050 | 246 | 67 |
| Ex.13 | SJ+calendar (co-PES) | 2.2T | Triple | 49.8 | 0.47 | 106 | 0.080 | 204 | 60 | 0.31 | 55 | 14 | 0,080 | 204 | 60 |
| Ex.14 | SJ+calendar (co-PES) | 2.2T | Triple | 91.1 | 0.46 | 198 | 0.080 | 375 | 79 | 0.30 | 78 | 20 | 0.080 | 375 | 79 |
| Ex.15 | SJ+calendar (co-PES) | 2.2T | Triple | 105.2 | 0.78 | 135 | 0.100 | 342 | 80 | 0.58 | 88 | 25 | 0.100 | 342 | 80 |
| Com.Ex.6 | SJ alone | 3.3T | Single | 398.5 | 3.05 | 131 | - | - | - | - | - | - | - | - | - |
| Ex.16 | SJ+calender | 3.3T | Double | 86.7 | 0.46 | 188 | 0.090 | 313 | 75 | 0.37 | 101 | 30 | - | - | - |
| Ex.17 | SJ product+MB | 3.3T | Double | 111.8 | 0.82 | 136 | 0.210 | 398 | - | 0.61 | 128 | 39 | - | - | - |
| Ex.18 | SJ product +MB+calender | 3.3T | Triple | 97.8 | 0.49 | 200 | 0.125 | 432 | - | 0.24 | 125 | 42 | 0.125 | 135 | 48 |

| | Step | Fineness | Layer structure | Nonwoven sheet | | | First surface layer | | | Substrate layer | | | Second surface layer | | |
|---|---|---|---|---|---|---|---|---|---|---|---|---|---|---|---|
| | | | | Total basis weight (g/m²) | Total thickness (mm) | Total density (kg/m³) | Thickness (mm) | Density (kg/m³) | Bonded fiber ratio (%) | Thickness (mm) | Density (kg/m³) | Bonded fiber ratio (%) | Thickness (mm) | Density (kg/m³) | Bonded fiber ratio (%) |
| Ex.19 | SJ product +MB | 3.3T | Double | 138.0 | 1.06 | 130 | 0.140 | 471 | - | 0.92 | 114 | 44 | - | - | - |
| Ex.20 | SJ product +MB+calender | 3.3T | Triple | 137.0 | 0.60 | 228 | 0.080 | 648 | - | 0.42 | 148 | 44 | 0.100 | 214 | 58 |
| Ex.21 | Dry-heated product | 3.3T | Triple | 47.2 | 0.46 | 103 | 0.070 | 181 | 55 | 0.32 | 70 | 20 | 0.070 | 181 | 55 |
| Ex.22 | Dry-heated product | 3.3T | Triple | 93.0 | 0.47 | 198 | 0.090 | 294 | 74 | 0.29 | 134 | 41 | 0.090 | 294 | 74 |
| Com.Ex.7 | SJ alone | 3.3T | Single | 186.3 | 0.83 | 224 | - | - | - | 0.83 | 224 | 68 | - | - | - |
| Com.Ex.8 | SJ+calender | 3.3T | Triple | 185.7 | 0.66 | 281 | 0.030 | 637 | 88 | 0.60 | 178 | 54 | 0.030 | 637 | 88 |
| Com.Ex.9 | EPF-DV1000H | | Double | 96.8 | 0.42 | 230 | 0.160 | 123 | - | 0.26 | 297 | 45 | - | - | - |
| Com.Ex.10 | EPF-DV1000H substrate alone | | Single | 77.2 | 0.26 | 297 | - | - | - | 0.26 | 297 | 45 | - | - | - |
| Com.Ex.11 | For Eheim 2213 | | Single | 337.0 | 25.40 | 13 | - | - | - | - | - | - | - | - | - |

[Table 3]

[Table 3]

Table 3

| | Flexural rigidity (mm) | | Stiffness ratio MD/CD | Air-permeability (cc/cm²/sec.) | Filtration efficiency (%) | Air-flow resistance (Pa) | Plated product | | Liquid permeability (sec./100cc) | Friction resistance (number) |
| | MD | CD | | | | | Pleatability | Sinking deformation (mm) | | |
|---|---|---|---|---|---|---|---|---|---|---|
| Ex.5 | 30 | 63 | 0.48 | 398 | 4.2 | 0 | A | 3 | 2.0 | - |
| Com.Ex. 4 | 84 | 93 | 0.90 | 222 | 8.9 | 5 | A | 28 (collapse) | 4.0 | - |
| Ex.6 | 45 | 51 | 0.88 | 337 | 4.7 | 2 | A | 2 | 3.8 | - |
| Ex.7 | 29 | 59 | 0.49 | 349 | 4.6 | 0 | A | 2 | 2.2 | - |
| Com.Ex. 5 | 60 | 78 | 0.77 | 111 | 13.1 | 8 | A | 28 (collapse) | 9.8 | - |
| Ex.8 | 20 | 43 | 0.47 | 144 | 11.0 | 5 | A | 1 | 7 | - |
| Ex.9 | 17 | 34 | 0.50 | 150 | 10.5 | 4 | A | 1 | 7 | - |
| Ex.10 | 53 | 63 | 0.84 | 91 | 13.0 | 10 | A | 2 | 11.0 | - |
| Ex.11 | 15 | 38 | 0.39 | 32 | 21.0 | 24 | A | 1 | 14.4 | - |
| Ex.12 | 11 | 30 | 0.37 | 92 | 13.3 | 11 | A | 1 | 11.6 | - |
| Ex.13 | 40 | 50 | 0.80 | 104 | 10.5 | 7 | A | 2 | 10.6 | - |
| Ex.14 | 21 | 41 | 0.51 | 62 | 14.0 | 11 | A | 1 | 12.4 | - |
| Ex.15 | 15 | 48 | 0.31 | 114 | 8.6 | 6 | A | 1 | 9.8 | - |
| Com.Ex. 6 | 1 | 1 | 1.00 | 48 | 22.9 | 21 | B | Incapable measurement | 12.6 | - |
| Ex.16 | 27 | 48 | 0.56 | 151 | 9.9 | 5 | A | 4 | 6.8 | - |
| Ex.17 | 5 | 5 | 1.00 | 55 | 14.0 | 19 | A | 1 | 14.2 | 50< |
| Ex.18 | 9 | 10 | 0.90 | 48 | 16.7 | 21 | A | 1 | 14.4 | 50< |
| Ex.19 | 12 | 20 | 0.60 | 45 | 16.3 | 23 | A | 1 | 13.8 | 50< |
| Ex.20 | 11 | 30 | 0,37 | 40 | 20.7 | 25 | A | 1 | 14.6 | 50< |
| Ex.21 | 44 | 58 | 0.76 | 318 | 4.6 | 2 | A | 2 | 3.8 | - |

(continued)

| | Flexural rigidity (mm) | | Stiffness ratio MD/CD | Air-permeability (cc/cm$^2$/sec.) | Filtration efficiency (%) | Air-flow resistance (Pa) | Plated product | | Liquid permeability (sec./100cc) | Friction resistance (number) |
|---|---|---|---|---|---|---|---|---|---|---|
| | MD | CD | | | | | Pleatability | Sinking deformation (mm) | | |
| Ex.22 | 32 | 54 | 0.59 | 153 | 11.0 | 5 | A | 1 | 6.8 | - |
| Com.Ex. 7 | 10 | 25 | 0.40 | 83 | 15.8 | 10 | C | Incapable measurement | 13.6 | - |
| Com.Ex. 8 | 6 | 18 | 0.33 | 59 | 18.2 | 14 | C | Incapable measurement | 14.2 | - |
| Com.Ex. 9 | - | - | - | 18 | 99.9 | 59 | A | 4 | 60< | 12 |
| Com.Ex. 10 | - | - | - | 126 | - | - | A | 28 (collapse) | 10 | - |
| Com.Ex. 11 | - | - | - | - | - | - | D | - | 0.8 | - |

As apparent from the results of Tables 2 and 3, the nonwoven sheets of Examples have excellent stiffness, pleatability and filterability. In contrast, the nonwoven sheets of Comparative Examples have an insufficient stiffness and a low pleatability.

INDUSTRIAL APPLICABILITY

The nonwoven sheet of the present invention has an excellent flexural rigidity and an excellent formability in fabrication (or form processing), although the thickness of the nonwoven sheet is as small as that of a conventional nonwoven fabric. Thus the nonwoven sheet is widely usable for various gas and liquid filters (for example, liquid filters in the fields of electric home appliance, pharmaceutical industry, electronic industry, food industry, automobile industry, and others; and gas filters in the fields of electric home appliance, cabins for automobile, and others). In particular, since a filter containing a moistenable-thermal adhesive fiber has high water-absorption rate or water retention, the filter is also useful as a filter for filtrating water or water vapor, for example, a filter for a home or industrial water purifier, a humidifier, or the like. Moreover, since the nonwoven sheet of the present invention contains thermal adhesive fibers uniformly and firmly bonded to each other and has a strong network structure, the sheet is useful for a filter for highly viscous liquid. In particular, the nonwoven sheet containing a thermal adhesive fiber containing an ethylene-vinyl alcohol-series copolymer has a high hydrophilicity and an affinity with an oil component, the sheet is useful for a filter for liquid (such as water or an oil component) . Further, the nonwoven sheet of the present invention is suitable for a filter material to be subjected to pressing, corrugating, pleating, embossing. In particular, in terms of achievement of the form or configuration stability and the filterability in the thinness, the sheet is particularly suitable for a pleated filter.

DESCRIPTION OF REFERENCE NUMERALS

1 ··· Sample
2 ··· Horizontal table
11 ··· Pleated sample
12 ··· Acrylic board
13 ··· Weight

**Claims**

1.  A nonwoven sheet for a filter, the nonwoven sheet comprising a substrate layer and a surface layer over at least one side of the substrate layer, wherein the substrate layer comprises a fiber aggregate nonwoven structural member, wherein the fiber aggregate nonwoven structural member consists of a thermal adhesive fiber, wherein the thermal adhesive fibers are melt-bonded to fix the fibers of the fiber aggregate nonwoven structural member,
    wherein the substrate layer has an average thickness of not less than 0.2 mm to less than 1 mm and an apparent density of 30 to 170 kg/m$^3$, and the thermal adhesive fibers arc substantially uniformly melt-bonded in a surface direction of the substrate layer, wherein the surface layer comprises a fiber aggregate nonwoven structural member having an apparent density higher than the apparent density of the substrate layer, wherein an apparent density ratio of the substrate layer relative to the surface layer (ratio of the substrate layer/the surface layer) is 1/1.5 to 1/10 and wherein in accordance with JIS L1913, the thickness of the fiber aggregate nonwoven structural member is measured, and the apparent density is calculated therefrom.

2.  A nonwoven sheet according to claim 1, wherein the substrate layer has an apparent density of 40 to 150 kg/m$^3$, the surface layer has an apparent density of 80 to 800 kg/m$^3$, and the nonwoven sheet has an apparent density ratio of both layers of 1/2 to 1/8 in a ratio of the substrate layer/the surface layer and wherein the thermal adhesive fiber is substantially uniformly melt-bonded in a thickness direction of the substrate layer.

3.  A nonwoven sheet according to claim 1 or 2, wherein the surface layer comprises a layer formed by heat-pressing.

4.  A nonwoven sheet according to claim 1 or 2, wherein the fiber aggregate nonwoven structural member constituting the surface layer comprises a meltblown nonwoven fabric.

5.  A nonwoven sheet according to claim 1 or 2, wherein the surface layer comprises a meltblown nonwoven fabric and is in the form of a heat-pressed layer.

**6.** A nonwoven sheet according to any one of claims 1 to 5, wherein the nonwoven sheet has an average thickness of 0.35 to 1.2 mm and an average thickness ratio of the substrate layer relative to the surface layer of 1.2/1 to 30/1 in a ratio of the substrate layer/the surface layer.

**7.** A nonwoven sheet according to any one of claims 1 to 6, wherein the thermal adhesive fiber contains an ethylene-vinyl alcohol-series copolymer, the ethylene-vinyl alcohol-series copolymer forms a continuous area of a surface of the thermal adhesive fiber in a longitudinal direction of the thermal adhesive fiber, and the ethylene-vinyl alcohol-series copolymer has an ethylene unit content of 10 to 60% by mol, or wherein the thermal adhesive fiber contains a hydrophilic polyester, the hydrophilic polyester forms a continuous area of a surface of the thermal adhesive fiber in a longitudinal direction of the thermal adhesive fiber.

**8.** A nonwoven sheet according to any one of claims 1 to 7, which has a flexural rigidity of not more than 70 mm in machine direction and that of not more than 70 mm in cross direction, wherein the flexural rigidity is shown as a displacement by gravity upon a sheet of 25 mm wide and 300 mm long being slid over so as to protrude for 100 mm from an edge of a horizontal table.

**9.** A process for producing a nonwoven sheet for a filter recited in any one of claims 1 to 8, the process comprising a melt-bonding step of heating a nonwoven web containing a thermal adhesive fiber to melt-bond the thermal adhesive fibers and give a plate-like fiber aggregate nonwoven structural member, wherein the nonwoven web is heated by a high-temperature water vapor.

**10.** A process according to claim 9, which further comprises a step of heat-pressing at least one side of the plate-like fiber aggregate nonwoven structural member given in the melt-bonding step.

**11.** A process according to any one of claims 9 or 10, which further comprises a meltblown lamination step of laminating a meltblown nonwoven fabric over at least one side of the plate-like fiber aggregate nonwoven structural member given in the melt-bonding step and heating the resulting laminated product by a high-temperature water vapor.

**12.** A filter comprising a nonwoven sheet recited in any one of claims 1 to 8.

**13.** A filter according to claim 12, which is pleated.

**Patentansprüche**

**1.** Eine Vliesstoffbahn für einen Filter, wobei die Vliesstoffbahn eine Substratschicht und eine Oberflächenschicht über mindestens einer Seite der Substratschicht umfasst, wobei die Substratschicht ein Faseraggregat-Vliesstrukturelement umfasst, wobei das Faseraggregat-Vliesstrukturelement aus einer Heißklebefaser besteht, wobei die Heißklebefasern schmelzverbunden sind, um die Fasern des Faseraggregat-Vliesstrukturelements zu fixieren, wobei die Substratschicht eine mittlere Dicke von nicht weniger als 0,2 mm bis weniger als 1 mm und eine scheinbare Dichte von 30 bis 170 kg/m$^3$ aufweist und die Heißklebefasern im Wesentlichen gleichmäßig in einer Oberflächenrichtung der Substratschicht schmelzverbunden sind, wobei die Oberflächenschicht ein Faseraggregat-Vliesstrukturelement mit einer scheinbaren Dichte, die höher ist als die scheinbare Dichte der Substratschicht, umfasst, wobei ein scheinbares Dichtenverhältnis der Substratschicht bezogen auf die Oberflächenschicht (Verhältnis von Substratschicht/Oberflächenschicht) 1/1,5 bis 1/10 beträgt und wobei die Dicke des Faseraggregat-Vliesstrukturelements gemäß JIS L 1913 gemessen wird und die scheinbare Dichte daraus berechnet wird.

**2.** Eine Vliesstoffbahn nach Anspruch 1, wobei die Substratschicht eine scheinbare Dichte von 40 bis 150 kg/m$^3$ aufweist, die Oberflächenschicht eine scheinbare Dichte von 80 bis 800 kg/m$^3$ aufweist und die Vliesstoffbahn ein scheinbares Dichtenverhältnis beider Schichten von 1/2 bis 1/8 in einem Verhältnis von Substratschicht/Oberflächenschicht aufweist, wobei die Heißklebefaser im Wesentlichen gleichmäßig in einer Dickerichtung der Substratschicht schmelzverbunden ist.

**3.** Eine Vliesstoffbahn nach Anspruch 1 oder 2, wobei die Oberflächenschicht eine durch Heißpressen gebildete Schicht umfasst.

**4.** Eine Vliesstoffbahn nach Anspruch 1 oder 2, wobei das Faseraggregat-Vliesstrukturelement, das die Oberflächenschicht bildet, ein schmelzgeblasenes Vliesgewebe umfasst.

**5.** Eine Vliesstoffbahn nach Anspruch 1 oder 2, wobei die Oberflächenschicht ein schmelzgeblasenes Vliesgewebe umfasst und in Form einer heißgepressten Schicht vorliegt.

**6.** Eine Vliesstoffbahn nach einem der Ansprüche 1 bis 5, wobei die Vliesstoffbahn eine mittlere Dicke von 0,35 bis 1,2 mm und ein mittleres Dickenverhältnis der Substratschicht bezogen auf die Oberflächenschicht von 1,2/1 bis 30/1 in einem Verhältnis von Substratschicht/Oberflächenschicht aufweist.

**7.** Eine Vliesstoffbahn nach einem der Ansprüche 1 bis 6, wobei die Heißklebefaser ein Copolymer aus der Ethylen-Vinylalkohol-Reihe enthält, das Copolymer aus der Ethylen-Vinylalkohol-Reihe einen durchgehenden Bereich einer Oberfläche der Heißklebefaser in einer Längsrichtung der Heißklebefaser bildet und das Copolymer aus der Ethylen-Vinylalkohol-Reihe einen Gehalt an Ethyleneinheiten von 10 bis 60 Mol-% aufweist, oder wobei die Heißklebefaser einen hydrophilen Polyester enthält, wobei der hydrophile Polyester einen durchgehenden Bereich einer Oberfläche der Heißklebefaser in einer Längsrichtung der Heißklebefaser bildet.

**8.** Eine Vliesstoffbahn nach einem der Ansprüche 1 bis 7, welche eine Biegesteifigkeit von nicht mehr als 70 mm in Arbeitsrichtung und von nicht mehr als 70 mm in Querrichtung aufweist, wobei die Biegesteifigkeit als Verschiebung durch Schwerkraft auf einer Bahn mit einer Breite von 25 mm und einer Länge von 300 mm angezeigt wird, die derart verschoben wird, dass sie 100 mm über eine Kante eines horizontalen Tisches hinausragt.

**9.** Ein Verfahren zur Herstellung einer Vliesstoffbahn für einen Filter nach einem der Ansprüche 1 bis 8, wobei das Verfahren einen Schmelzbindeschritt des Erhitzens eines Vliesstoffbahnenmaterials, das eine Heißklebefaser enthält, umfasst, um die Heißklebefasern schmelzzubinden und ein plattenartiges Faseraggregat-Vliesstrukturelement zu ergeben, wobei das Vliesstoffbahnenmaterial mit Hochtemperatur-Wasserdampf erhitzt wird.

**10.** Ein Verfahren nach Anspruch 9, welches ferner einen Schritt des Heißpressens von mindestens einer Seite des in dem Schmelzbindeschritt erhaltenen plattenartigen Faseraggregat-Vliesstrukturelements umfasst.

**11.** Ein Verfahren nach einem der Ansprüche 9 oder 10, welches ferner einen Schmelzblas-Laminierschritt des Laminierens eines schmelzgeblasenen Vliesgewebes über mindestens eine Seite des in dem Schmelzbindeschritt erhaltenen plattenartigen Faseraggregat-Vliesstrukturelements und des Erhitzens des resultierenden laminierten Produkts mit Hochtemperatur-Wasserdampf umfasst.

**12.** Ein Filter, umfassend eine Vliesstoffbahn nach einem der Ansprüche 1 bis 8.

**13.** Ein Filter nach Anspruch 12, welcher gefaltet ist.


**Revendications**

**1.** Feuille non tissée pour un filtre, la feuille non tissée comprenant une couche de substrat et une couche de surface sur au moins un côté de la couche de substrat, dans laquelle la couche de substrat comprend un élément structurel non tissé d'agrégat de fibres, dans laquelle l'élément structurel non tissé d'agrégat de fibres est constitué d'une fibre adhésive thermique, dans laquelle les fibres adhésives thermiques sont liées par fusion pour fixer les fibres de l'élément structurel non tissé d'agrégat de fibres,

dans laquelle la couche de substrat a une épaisseur moyenne supérieure ou égale à 0,2 mm et inférieure à 1 mm et une masse volumique apparente de 30 à 170 kg/m³, et les fibres adhésives thermiques sont liées par fusion de façon sensiblement uniforme dans une direction de surface de la couche de substrat, dans laquelle la couche de surface comprend un élément structurel non tissé d'agrégat de fibres ayant une masse volumique apparente supérieure à la masse volumique apparente de la couche de substrat, dans laquelle un rapport de masse volumique apparente de la couche de substrat par rapport à la couche de surface (rapport de la couche de substrat à la couche de surface) va de 1/1,5 à 1/10 et dans laquelle selon JIS L1913, on mesure l'épaisseur de l'élément structurel non tissé d'agrégat de fibres et on calcule la masse volumique apparente à partir de celle-ci.

**2.** Feuille non tissée selon la revendication 1, dans laquelle la couche de substrat a une masse volumique apparente de 40 à 150 kg/m³, la couche de surface a une masse volumique apparente de 80 à 800 kg/m³, et la feuille non tissée a un rapport de masse volumique apparente des deux couches de 1/2 à 1/8 dans un rapport de la couche de substrat à la couche de surface et dans laquelle la fibre adhésive thermique est liée par fusion de façon sensiblement uniforme dans une direction d'épaisseur de la couche de substrat.

**3.** Feuille non tissée selon la revendication 1 ou 2, dans laquelle la couche de surface comprend une couche formée par pressage à chaud.

**4.** Feuille non tissée selon la revendication 1 ou 2, dans laquelle l'élément structurel non tissé d'agrégat de fibres constituant la couche de surface comprend un tissu non tissé de fusion-soufflage.

**5.** Feuille non tissée selon la revendication 1 ou 2, dans laquelle la couche de surface comprend un tissu non tissé de fusion-soufflage et se présente sous la forme d'une couche pressée à chaud.

**6.** Feuille non tissée selon l'une quelconque des revendications 1 à 5, dans laquelle la feuille non tissée a une épaisseur moyenne de 0,35 à 1,2 mm et un rapport d'épaisseur moyenne de la couche de substrat par rapport à la couche de surface de 1,2/1 à 30/1 dans un rapport de la couche de substrat à la couche de surface.

**7.** Feuille non tissée selon l'une quelconque des revendications 1 à 6, dans laquelle la fibre adhésive thermique contient un copolymère de la série éthylène-alcool vinylique, le copolymère de la série éthylène-alcool vinylique forme une région continue d'une surface de la fibre adhésive thermique dans une direction longitudinale de la fibre adhésive thermique, et le copolymère de la série éthylène-alcool vinylique a une teneur en unités éthylène de 10 à 60 % par mole, ou dans laquelle la fibre adhésive thermique contient un polyester hydrophile, le polyester hydrophile forme une région continue d'une surface de la fibre adhésive thermique dans une direction longitudinale de la fibre adhésive thermique.

**8.** Feuille non tissée selon l'une quelconque des revendications 1 à 7, qui a une rigidité en flexion inférieure ou égale à 70 mm dans le sens machine et inférieure ou égale à 70 mm dans le sens travers, dans laquelle la rigidité en flexion est indiquée par un déplacement par gravité lorsqu'une feuille de 25 mm de largeur et de 300 mm de longueur glisse jusqu'à dépasser de 100 mm d'un bord d'un plateau horizontal.

**9.** Procédé de fabrication d'une feuille non tissée pour un filtre selon l'une quelconque des revendications 1 à 8, le procédé comprenant une étape de liaison par fusion qui consiste à chauffer une nappe non tissée contenant une fibre adhésive thermique pour lier par fusion les fibres adhésives thermiques et produire un élément structurel non tissé d'agrégat de fibres en plaque, dans lequel la nappe non tissée est chauffée par de la vapeur d'eau à haute température.

**10.** Procédé selon la revendication 9, qui comprend en outre une étape de pressage à chaud d'au moins un côté de l'élément structurel non tissé d'agrégat de fibres en plaque produit à l'étape de liaison par fusion.

**11.** Procédé selon l'une quelconque des revendications 9 ou 10, qui comprend en outre une étape de stratification à fusion-soufflage qui consiste à stratifier un tissu non tissé de fusion-soufflage sur au moins un côté de l'élément structurel non tissé d'agrégat de fibres en plaque produit à l'étape de liaison par fusion et à chauffer le produit stratifié obtenu par de la vapeur d'eau à haute température.

**12.** Filtre comprenant une feuille non tissée selon l'une quelconque des revendications 1 à 8.

**13.** Filtre selon la revendication 12, qui est plissé.

Fig. 1

(a)

MD(machine direction)

1b

1a

2

1

1

d

(b)

(c)

Fig. 2

11

13

12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4522671 B
- JP 2004019061 A
- JP 2009233645 A
- JP 2009084717 A
- JP 2012077432 A

- EP 2003235 A2
- JP 2007098356 A
- JP 2010149037 A
- JP 2003159506 A
- JP H04145914 A